(19) Europäisches Patentamt
European Patent Office
Office européen des brevets

(11) **EP 3 124 314 B1**

(12) **EUROPÄISCHE PATENTSCHRIFT**

(45) Veröffentlichungstag und Bekanntmachung des Hinweises auf die Patenterteilung:
**22.05.2019   Patentblatt 2019/21**

(51) Int Cl.:
***B60L 50/50*** *(2019.01)*

(21) Anmeldenummer: **16181805.9**

(22) Anmeldetag: **28.07.2016**

(54) **FREMDOBJEKTERKENNUNG, INSBESONDERE FÜR INDUKTIVE LADESYSTEME**

FOREIGN OBJECT DETECTION, IN PARTICULAR FOR WIRELESS CHARGING SYSTEMS

DETECTION DE CORPS ETRANGERS, EN PARTICULIER POUR SYSTEMES DE CHARGE INDUCTIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015   DE 102015112431**

(43) Veröffentlichungstag der Anmeldung:
**01.02.2017   Patentblatt 2017/05**

(73) Patentinhaber: **Zollner Elektronik AG 93499 Zandt (DE)**

(72) Erfinder:
- **Schötz, Karl**
  **94267 Prackenbach (DE)**
- **Wühr, Konrad**
  **94256 Drachselried (DE)**
- **Wühr, Daniel**
  **94256 Drachselried (DE)**
- **Eder, Markus**
  **93468 Miltach (DE)**
- **Wühr, Johann**
  **94234 Viechtach (DE)**

(74) Vertreter: **Bittner, Bernhard Hannke Bittner & Partner Patent- und Rechtsanwälte mbB Prüfeninger Strasse 1 93049 Regensburg (DE)**

(56) Entgegenhaltungen:
DE-A1-102013 218 617     DE-A1-102013 219 678
US-A1- 2014 015 329

- **Anonymous: "Scattering parameters - Wikipedia", , 23 July 2015 (2015-07-23), XP055524392, Retrieved from the Internet: URL:https://en.wikipedia.org/w/index.php?title=Scattering_parameters&oldid=672764723 [retrieved on 2018-11-16]**
- **Anonymous: "Paramètres S - Wikipédia", , 24 November 2014 (2014-11-24), XP055524394, Retrieved from the Internet: URL:https://fr.wikipedia.org/w/index.php?title=Paramètres_S&oldid=109394116 [retrieved on 2018-11-16]**

**Beschreibung**

Die vorliegende Erfindung bezieht sich auf eine Vorrichtung zum Erfassen (bzw. Erkennen) von Objekten (genauer zum Erfassen der Anwesenheit von Objekten) und insbesondere von Fremdkörpern. Die Vorrichtung wird unter Bezugnahme auf ein Ladesystem zum Laden von elektrischen Geräten beschrieben. Es wird jedoch darauf hingewiesen, dass diese Vorrichtung zum Erfassen von Objekten auch in anderen Bereichen Anwendung finden kann, beispielsweise bei der Erfassung von Personen oder Lebewesen, aber auch bei der Erfassung von Objekten wie beispielsweise Kraftfahrzeugen. Bei den Fremdkörpern, die auch als Fremdobjekte bezeichnet werden können, kann es sich sowohl um anorganische Körper beispielsweise Metalle handeln als auch im organische Körper.

In jüngerer Zeit ist die sogenannte Elektromobilität mehr und mehr ein wichtiges Thema für viele Kraftfahrzeughersteller. Ein wesentliches Problem hierbei ist die Aufladung der Kraftfahrzeuge. Hierfür sind im Stand der Technik bereits zahlreiche Vorgehensweisen bekannt, beispielsweise über Steckanschlüsse und dergleichen. Im Stand der Technik weiterhin bekannt sind mittlerweile auch Ladesysteme, welche den Ladevorgang induktiv und insbesondere berührungslos durchführen. Zu diesem Zweck kann beispielsweise das Kraftfahrzeug über ein Ladegerät gefahren werden, und dieses Ladegerät weist eine Primärspule auf, über welche eine Spule des kraftfahrzeugseitigen Ladesystems versorgt wird. Erhebliches Sicherheitsproblem bei diesen Vorgehensweisen können Fremdkörper darstellen, die beispielsweise auf/zwischen der Ladestation liegen. Insbesondere können dabei Fremdobjekte mit einem metallischen Anteil zu einem Sicherheitsrisiko werden, da diese ebenfalls sich während des Ladevorgangs stark erhitzen können und es so zu Beschädigungen kommen kann. Daneben kann sich während des Ladevorgangs auch ein Sicherheitsrisiko für Personen ergeben, etwa spielende Kinder, die mit ihrer Hand zwischen die Ladeelemente greifen.

Der vorliegenden Erfindung liegt daher die Aufgabe zugrunde, die Sicherheit derartiger induktiver Ladeeinrichtungen zu erhöhen. Diese Aufgabe wird erfindungsgemäß durch den Gegenstand des unabhängigen Anspruchs erreicht. Vorteilhafte Ausführungsformen und Weiterbildungen sind Gegenstand der Unteransprüche. Eine weitere Aufgabe der Erfindung besteht darin, eine Erfassungseinrichtung zur Verfügung zu stellen, welche in kostengünstiger Weise ein Erfassen von Objekten, insbesondere ein Erfassen und/oder Feststellen der Anwesenheit von Objekten ermöglicht.

Eine erfindungsgemäße Ladeanordnung zum Laden von elektrisch betriebenen Einrichtungen weist eine Primärspule auf, welche dazu geeignet und bestimmt ist, ein magnetisches Feld zu erzeugen, elektrische Energie induktiv auf eine Sekundärspule, welche Bestandteil der elektrisch betriebenen Einrichtung (beispielsweise eines Fahrzeugs und insbesondere eines elektrisch betriebenen Fahrzeugs) ist zu übertragen. Dabei weist die Ladeanordnung eine Erfassungseinrichtung zum Erfassen von Objekten auf und insbesondere von (Fremd-) Objekten bzw. Fremdkörpern welche sich zwischen der Primärspule und der Sekundärspule befinden.

Bei der Ladeanordnung handelt es sich insbesondere um ein Primärmodul, welches dazu geeignet und bestimmt ist, ein Sekundärmodul (etwa ein eine Sekundärspule aufweisendes Modul) des zu ladenden Objekts (z.B. eines Fahrzeugs), induktiv mit Energie zu versorgen.

Erfindungsgemäß weist die Erfassungseinrichtung wenigstens einen Signalgenerator auf, welcher einen elektrischen Schaltkreis und insbesondere einen elektrischen Schwingkreis der wenigstens eine Spule und/oder wenigstens einen Kondensator aufweist, mit einer Wechselspannung versorgt, sowie eine Sensoreinrichtung, die wenigstens eine für diesen (von der Wechselspannung betriebenen) elektrischen Schwingkreis charakteristische elektrische Größe erfasst. Bevorzugt handelt es sich bei der Wechselspannung um eine Sinusspannung und allgemein um eine periodische Wechselspannung. Bei dem Signalgenerator kann es sich bevorzugt um einen Frequenzgenerator handeln.

Besonders bevorzugt erfasst die Sensoreinrichtung die charakteristische Größe des Schaltkreises durch eine Beaufschlagung desselben mit der Wechselspannung und genauer durch Erfassen einer Reaktion des mit der Wechselspannung beaufschlagten Schaltkreises auf die Anwesenheit eines Fremdkörpers. Bevorzugt handelt es sich bei dem elektrischen Schaltkreis um einen elektrischen Schwingkreis, der bevorzugt wenigstens eine Spule und einen Kondensator aufweist. Die oben genannte Spule der Erfassungseinrichtung wird zum Zwecke der besseren Abgrenzung gegenüber der Primärspule im Folgenden auch als Erfassungsspule bezeichnet. Allgemein weist die Erfassungseinrichtung wenigstens ein elektrisches Bauteil auf, dessen Eigenschaften und insbesondere dessen Stromleiteigenschaften sich bei Anwesenheit eines Fremdkörpers ändern. Bei diesem Bauteil kann es sich insbesondere um eine Spule (oder allgemein um eine Induktivität) oder einen Kondensator (oder allgemein um ein kapazitives Element) handeln.

Der Erfindung liegt daher die Idee zugrunde, einen elektrischen Schwingkreis zum Erfassen von Fremdkörpern zu verwenden. Dies wiederum beruht auf der Überlegung, dass Fremdkörper, beispielsweise metallische Fremdobjekte, sich auf einen derartigen Schwingkreis auswirken, indem sie beispielsweise dessen Eigenfrequenz verändern. Derartige Änderungen der Eigenfrequenz können wiederum erfasst werden. Auch können beispielsweise Rücklaufleistungen (return loss) oder ähnliche Parameter erfasst werden. Genauer gesagt, kann wie unten genauer erläutert wird, anhand von S-Parametermessungen (z.B. return loss) oder ähnlicher Parameter zuerst die Eigenfrequenz ermittelt werden und dann erst Änderungen der Eigenfrequenz. Dies geschieht bspw. durch return-loss-Messungen.

Die Erfassungseinrichtung kann dabei bevorzugt ein Bestandteil der Ladeanordnung sein, bzw. mit dem Primämodul in fester Verbindung stehen (bzw. einen Teil des Primärmoduls ausbilden). Es wäre jedoch auch denkbar, dass die Erfassungseinrichtung in das Sekundärmodul des zu ladenden Objekts integriert ist oder aber dass die Erfassungseinrichtung ein weiteres Modul ist, welches beispielsweise zwischen dem Primärmodul und dem Sekundärmodul angeordnet ist.

Bevorzugt ist die elektrische und aufzuladende Einrichtung aus einer Gruppe von Einrichtungen ausgewählt, welche Kraftfahrzeuge, insbesondere PKWs, Motorräder, Haushaltsgeräte, Telekommunikationsgeräte, wie Smartphones und dergleichen, enthält. Vorteilhaft weist die Ladeanordnung ein Netzteil auf, um die Primärspule mit elektrischer Energie zu versorgen.

Bei einer weiteren vorteilhaften Ausführungsform wird die Primärspule mit einer Primärspannung einer ersten Frequenz betrieben und der Signalgenerator gibt eine Wechselspannung einer zweiten Frequenz ab und eine dieser beiden Frequenzen ist wenigstens doppelt so groß wie die andere der beiden Frequenzen. Es wird daher hier vorgeschlagen, dass sich die Frequenzen, die zum Betrieb des elektrischen Schaltkreises bzw. Schwingkreises einerseits verwendet werden und die zum Betrieb der Primärspule andererseits verwendet werden erheblich voneinander unterscheiden wenigstens um den Faktor 2. Bevorzugt ist die Frequenz, die zum Betrieb des Schaltkreises bzw. Schwingkreises verwendet wird wesentlich höher als die Frequenz, mit der die Primärspule versorgt wird. Vorzugsweise ist die eine der genannten Frequenzen wenigstens fünfmal so groß wie die andere, bevorzugt wenigstens zehnmal so groß, besonders bevorzugt wenigstens einhundertmal so groß. Auf diese Weise kann erreicht werden, dass auch während eines Betriebs der Primärspule der elektrische Schwingkreis nicht wesentlich durch den Einfluss der Primärspule bzw. deren magnetisches Feld beeinflusst wird.

Bei einer weiteren vorteilhaften Ausführungsform sind die Primärspule und die Erfassungsspule (oder allgemein die Erfassungseinrichtung bzw. Bestandteile der Erfassungseinrichtung) in einer vorgegebenen festen Position zueinander angeordnet. (wie erwähnt, kann der empfindliche Part kann auch ein Kondensator sein). Ein (zweites) Sensornetzwerk kann auch im Automodul angebracht sein. Auf diese Weise kann eine bessere Zwischenraumüberwachung erreicht werden. So können beispielsweise die Primärspule und die Erfassungseinrichtung (beispielsweise eine Erfassungsspule) an einem gemeinsamen Träger und/oder an einem gemeinsamen Gehäuse angeordnet sein. Besonders bevorzugt ist ein Schutzelement vorgesehen, welches die Primärspule sowie auch die Erfassungsspuleneinrichtung bzw. den elektrischen Schaltkreis und/oder den elektrischen Schwingkreis vor einer unmittelbaren Berührung schützt.

Eine Dicke bzw. Widerstandsfähigkeit dieser Schutzschicht kann sich dabei nach den jeweiligen Anforderungen richten. Etwa dem Einsatzgebiet der Erfassungseinrichtung oder auch dem Einsatzgebiet der Ladeanordnung.

Bei einer weiteren vorteilhaften Ausführungsform weist die Ladeanordnung eine Steuerungseinrichtung auf, welche eine Bestromung der Primärspule in Abhängigkeit von einem Ausgangssignal der Erfassungseinrichtung steuert. Falls sich beispielsweise anhand dieses Ausgangssignals ergibt, dass sich ein Fremdkörper zwischen der Primärspule und der Sekundärspule bzw. im Bereich der Primärspule befindet, so kann eine (Einschalt-)Bestromung der Primärspule verhindert oder eine Stromzufuhr für die Primärspule abgeschalten werden, um auf diese Weise Sicherungsrisiken zu verhindern. Weiterhin kann die Vorrichtung eine Informationsausgabeeinrichtung aufweisen, welche den Benutzer in physisch wahrnehmbarer Weise über einen Fremdkörper informiert. Genauer gesagt ist es möglich dass der Sensor auch eine Voraberkennung vor dem Ladebetrieb leistet. (da der Sensor eben auch unabhängig von dem Betrieb der Primärspule erfassen kann) Dies zeichnet ihn gegenüber anderen bekannten Sensorsystemen aus. Hier ist auch eine der großen Stärken der Erfindung zu sehen.

Diese Ausgabeeinrichtung kann dabei beispielsweise ein akustisches Alarmsignal ausgeben, welches dem Benutzer anzeigt, dass sich ein Fremdkörper im Bereich der Primärspule befindet. Weiterhin ist es auch möglich, dass bei der Erfassung eines Fremdkörpers auch während des laufenden Betriebs insbesondere des laufenden Ladebetriebs abgeschaltet wird oder ein Einschalten verhindert wird. Weiterhin ist es möglich, dass die Primärspule und die Erfassungsspule gemeinsam betrieben werden. Es ist jedoch auch möglich, dass die Erfassungsspule außerhalb des Betriebs der Primärspule betrieben wird.

Weiterhin kann eine Steuerungseinrichtung vorgesehen sein, welche Messungen auf Fremdkörper in vorgegebenen Zeitabständen bzw. zu diskreten Zeitpunkten durchführt, beispielsweise in einer vorgegebenen Taktung.

Die vorliegende Erfindung ist weiterhin auf eine Erfassungseinrichtung zum Erfassen von Objekten gerichtet. Dabei weist diese Erfassungseinrichtung wenigstens einen Signalgenerator auf, welcher einen elektrischen Schaltkreis und insbesondere einen Schwingkreis, der wenigstens eine Erfassungsspule und/oder wenigstens einen Kondensator aufweist, mit einer Wechselspannung versorgt. Weiterhin weist die Erfassungseinrichtung eine Sensoreinrichtung auf, welche wenigstens eine für diesen elektrischen Schwingkreis charakteristische elektrische Größe erfasst. Bevorzugt weist die Erfassungseinrichtung wenigstens zwei Spulen bzw. wenigstens zwei Erfassungsspulen auf. Bevorzugt weist die Erfassungseinrichtung wenigstens einen Kondensator auf.

Bei dieser Sensoreinrichtung kann es sich beispielsweise um eine Messeinrichtung handeln, welche ein von dem Schwingkreis stammendes elektrisches Signal misst. Ggfs. weist die Sensoreinrichtung wenigstens einen Richtkoppler auf. Bevorzugt wird jedoch eine Sensoreinrichtung verwendet, welche ohne die Verwendung eines Richtkopplers arbeitet.

Eine Anwendung dieser Erfassungseinrichtung kann wiederum eine Ladeeinrichtung zum Laden von beispielsweise Fahrzeugen sein. Daneben kann jedoch mittels der Erfassungseinrichtung auch eine Erfassung von anderen Objekten möglich sein, wie oben erwähnt, beispielsweise von Lebewesen oder auch von Fahrzeugen oder dergleichen. Die Lebendobjekterkennung kann jedoch auch mit der "einfachen" Variante mit nur einem Netzwerk bzw. Schaltkreis funktionieren. An dieser Stelle wird darauf hingewiesen, dass im Rahmen dieser Offenbarung neben dem Begriff "Schaltkreis" auch der Begriff "Netzwerk" verwendet wird. Bei dem Schaltkreis handelt es sich bevorzugt nicht um einen sog. Integrierten Schaltkreis (IC). Damit kann es sich bei dem Objekt sowohl um ein organisches als auch um ein anorganisches Objekt handeln. Daneben können diese Objekte metallische Objekte sein, aber auch nichtmetallische Objekte. Es wird auch hier vorgeschlagen, dass bestimmt wird, wie sich durch das besagte Objekt ein Verhalten des Schaltkreises bzw. Schwingkreises und insbesondere dessen Eigenfrequenz ändert.

Bevorzugt weist der Schwingkreis eine Vielzahl von Erfassungsspulen auf (zu jedem Schwingkreis gehört bevorzugt meistens immer genau eine Spule oder eine Vielzahl von in Serie und/oder parallel geschalteten Spulen) bevorzugt wenigstens vier Spulen, bevorzugt wenigstens fünf Spulen und bevorzugt wenigstens sechs Spulen.

Bei einer weiteren vorteilhaften Ausführungsform weist die Erfassungseinrichtung eine geradzahlige Anzahl von Spulen auf. Auf diese Weise können beispielsweise die Spulen bzw. Spulenbereiche jeweils paarweise in unterschiedlichen Richtungen gewickelt sein, sodass in der Gesamtheit die Spulen nicht durch ein magnetisches Feld, welches beispielsweise von der Primärspule stammt, beeinflusst werden. Allgemein ist es möglich, dass wenigstens zwei Spulen bzw. Spulenbereiche gegenläufig "gewickelt" sind bzw. in gegenläufiger Richtung verlaufende Windungen aufweisen. Auf diese Weise kann wie oben erwähnt, ein Effekt der Primärspule auf diese Spulen abgeschwächt werden. Die Anwesenheit eines Fremdkörpers wirkt sich jedoch in der Regel nur auf ein der genannten Spulen aus.

Weiterhin sind bevorzugt mehrere Spulen eines Schwingkreises seriell angeordnet. Es wäre jedoch auch möglich, dass im Rahmen eines Schwingkreises mehrere Spulen parallel angeordnet sind. Daneben können bevorzugt mehrere elektrische Schwingkreise vorgesehen sein, die beispielsweise jeweils wenigstens eine Spule und wenigstens einen Kondensator aufweisen. Dabei wäre es möglich, dass mittels einer Steuerung diese parallelen Schwingkreise beispielsweise nacheinander angesprochen bzw. bestromt werden. Auch wäre es möglich dass ein Kondensator schalttechnisch nacheinander mit mehreren Spulen verbunden wird, um so die einzelnen Schaltkreise bzw. Schwingkreise zu realisieren.

Bei einer weiteren vorteilhaften Ausführungsform wäre es möglich, dass sich eine erste Gruppe von Schwingkreisen und insbesondere die Spulen dieser Schwingkreise in einer ersten vorgegebenen Richtung erstreckt. Daneben wäre es möglich, dass sich eine erste Gruppe von Schwingkreisen in einer ersten Richtung erstreckt und eine zweite Gruppe von Schwingkreisen in einer zweiten insbesondere zu der ersten Richtung senkrechten Richtung erstreckt. Auf diese Weise wäre es möglich, dass auch eine relativ genaue Position der Objekte erfasst wird.

Insgesamt könnte so ein Array aus Schwingkreisen zur Verfügung gestellt werden. Durch entsprechende Abfrage der einzelnen Schwingkreise kann dann die Position des Objekts bestimmt werden, wobei beispielsweise davon ausgegangen werden kann, dass das Objekt sich auf einen Schwingkreis, der sich in der ersten Richtung erstreckt und auf einen zweiten Schwingkreis, der sich in einer zweiten zu der ersten Senkrechten Richtung erstreckt auswirkt.

Es wäre auch denkbar, dass eine noch genauere Position ermittelt wird. So könnte etwa ein Objekt, welches sich zwischen zwei Schwingkreisen befindet, sich auf eben diese beiden Schwingkreise auswirken. Auch aus dem Maß, wie sich das Objekt auf einen bestimmten Schwingkreis auswirkt, können Rückschlüsse gezogen werden. Auch wäre es möglich, ein Bewegungsprofil eines Objektes gegenüber der Messeinrichtung bzw. Erfassungseinrichtung zu bestimmen.

Bei einer weiteren vorteilhaften Ausführungsform ist die Frequenz des Signalgenerators in einem vorbestimmten Frequenzbereich bzw. Frequenzband durchstimmbar.

Vorteilhaft liegt eine Kapazität des bzw. wenigstens eines Kondensators des Schaltkreises zwischen 20pF und 1nF, bevorzugt zwischen 50pF und 500pF und bevorzugt zwischen 100pF und 300pF. Vorteilhaft ist der wenigstens eine Kondensator aus einer Gruppe von Kondensatoren ausgewählt, welche Folienkondensatoren, Keramikkondensatoren und dergleichen enthält. Daneben könnten auch sogenannte Kapazitätsdioden Anwendung finden, deren Kapazität veränderbar ist.

Bei einer weiteren vorteilhaften Ausführungsform weist die Vorrichtung einen A/D-Wandler auf um analoge Signale in digitale Signale umzuwandeln.

Bevorzugt erzeugt der Signalgenerator eine hinsichtlich der Frequenz veränderbare Ausgangsspannung. Auf diese Weise kann eine Frequenz, mit der oder die elektrische Schwingkreise angesteuert werden, in einem bestimmten Bereich und insbesondere einem bestimmten Bereich um eine Resonanzfrequenz angesteuert werden.

Bei einer weiteren vorteilhaften Ausführungsform weist die Erfassungseinrichtung eine Steuerungseinrichtung auf, welche die Frequenz der Ausgangsspannung des Signalgenerators in einem vorgegebenen Frequenzbereich steuert. So kann beispielsweise eine Frequenz des Signalgenerators in einem bestimmten Frequenzbereich durchgestimmt werden. So könnte beispielsweise die Frequenz in einem Bereich von +/- 50 Kilohertz (+/-50kHz) um eine Eigenfrequenz des Schwingkreises angesteuert werden.

Bevorzugt erlaubt die Sensoreinrichtung eine Erfassung nur einer Kenngröße oder nur weniger Kenngrößen des Schaltkreises bzw. Netzwerks. So könnte es sich bei dem Schaltkreis um einen Vierpol handeln, wobei etwa nur zwei Werte dieses Vierpols gemessen werden, wie etwa dessen $\underline{S}_{11}$ und dessen $\underline{S}_{21}$ - Parameter.

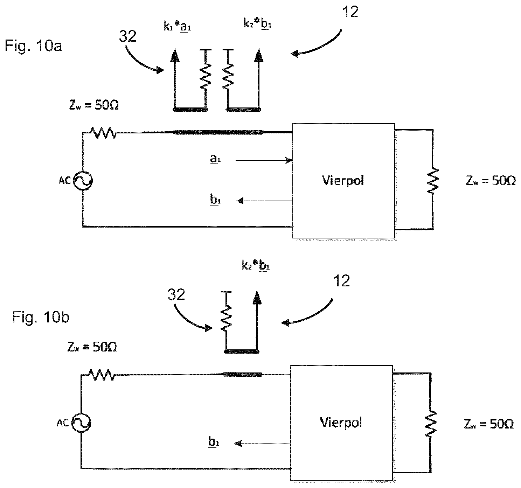

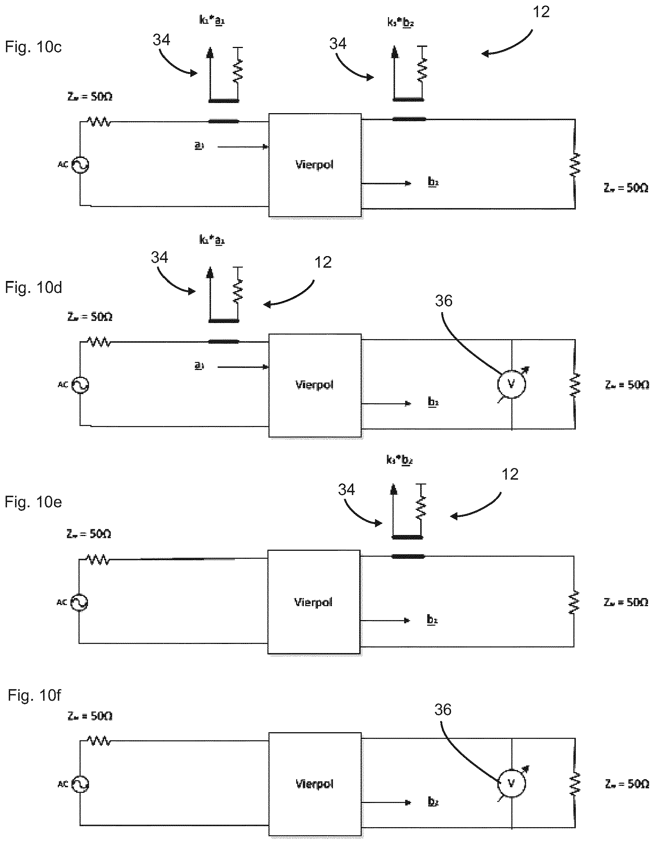

Ggfs. weist die Sensoreinrichtung wenigstens einen Richtkoppler auf, um wenigstens einen Anteil einer Spannung aus dem Schaltkreis abzugreifen. Bevorzugt ist jedoch eine Ausgestaltung, welche auf den Einsatz von Richtkopplern verzichtet (vgl. Fig. 10f). Ggfs. weist die Sensoreinrichtung wenigstens zwei derartige Richtkoppler auf. Bei einer weiteren vorteilhaften Ausführungsform handelt es sich bei wenigstens einem Richtkoppler um einen unidirektionalen Richtkoppler. Bei einer weiteren vorteilhaften Ausführungsform handelt es sich bei wenigstens einem dieser Richtkoppler um einen bidirektionalen Richtkoppler. Bei einer weiteren vorteilhaften Ausführungsform weist die Sensoreinrichtung wenigstens eine Messeinrichtung zur Messung einer Stromstärke oder einer Spannung auf. Vorteilhaft ist diese Messeinrichtung parallel zum dem erwähnten Schaltkreis oder Schwingkreis.

Bei einer weiteren bevorzugten Vorrichtung ist die für den Schwingkreis charakteristische Größe aus einer Gruppe von elektrischen Größen ausgewählt, welche eine Dämpfung des Schaltkreises bzw. Schwingkreises, eine Verlustleistung des Schaltkreises bzw. Schwingkreises, eine Ausgangsleistung des Schaltkreises bzw. Schwingkreises, eine Eigenfrequenz des Schaltkreises bzw. Schwingkreises, eine Änderung der Resonanzfrequenz des Schalt- bzw. Schwingkreises, eine Impedanz, eine Pegeländerung, eine Änderung einer Steigung bei einer Resonanzfrequenz und dergleichen enthält.

Bevorzugt handelt es sich jedoch bei der für den elektrischen Schwingkreis charakteristischen Größe um eine Größe, die sich bei Anwesenheit eines weiteren und insbesondere bei Anwesenheit eines zu erfassenden Objekts ändert. Damit wird genau genommen durch die Erfassungseinrichtung die Anwesenheit von Objekten (und insbesondere von Fremdobjekten) erfasst, bzw. deren Einfluss auf den Schaltkreis. Damit dient die Erfassungseinrichtung bevorzugt zum berührungslosen Erfassen bzw. Feststellen der Anwesenheit von (Fremdkörpern) bzw. Objekten. Bevorzugt dient die Erfassungseinrichtung auch zum nicht-optischen Erfassen von (Fremdkörpern) bzw. Objekten.

Bei einer weiteren vorteilhaften Ausführungsform ist die wenigstens eine und sind bevorzugt die wenigstens zwei Erfassungsspulen auf einer Platine angeordnet und besonders bevorzugt auf dieser Platine aufgedruckt. Diese Vorgehensweise hat sich als besonders platzsparend erwiesen. Bevorzugt sind die Windungen der Spule in wenigstens einer Ebene, bevorzugt in genau einer Ebene angeordnet. Dies führt zu einer Kostenreduzierung, weil ein PCB mit wenigen Layern kostengünstiger ist. Daneben kann auch eine Bauraumreduzierung erreicht werden. Dies kann wie erwähnt beispielsweise durch ein Aufdrucken auf eine Platine erreicht werden. Auch der oder die Kondensatoren kann/können auf der Platine angeordnet sein (oder sogar die gesamte Messelektronik).

Bei einer weiteren vorteilhaften Ausführungsform sind mehrere Spulen in einer Ebene angeordnet und bevorzugt sind alle Spulen in einer Ebene angeordnet.

Bei einer weiteren vorteilhaften Ausführungsform weist die Vorrichtung mehrere elektrische Schaltkreise bzw. Schwingkreise auf sowie eine Schalteinrichtung, die bewirkt, dass diese Schaltkreise bzw. Schwingkreise sequentiell mit einer Wechselspannung und insbesondere mit der Wechselspannung eines Signalgenerators beaufschlagt werden. Auf diese Weise können sequentiell mittels der Schalteinrichtung unterschiedliche Schwingkreise angesprochen werden und für jeden einzelnen dieser Schwingkreise bestimmt werden, ob sich in seiner Umgebung ein Fremdobjekt befindet. Bei einer bevorzugten Ausführungsform handelt es sich bei dieser Schalteinrichtung um einen sog. Multiplexer.

Die vorliegende Erfindung ist weiterhin auf eine (elektrische) Spulenanordnung, insbesondere für eine Erfassungseinrichtung zum Erfassen von Objekten gerichtet. Diese Spulenanordnung weist eine Träger auf, an bzw. auf dem eine Vielzahl von Spulen angeordnet ist.

Erfindungsgemäß ist wenigstens eine erste Gruppe von Spulen in einer ersten einen Bestandteil eines Schaltkreises bildenden Reihe von Spulen angeordnet ist und wenigstens eine zweite Gruppe von Spulen ist in einer zweiten einen Bestandteil eines Schaltkreises bildenden Reihe von Spulen angeordnet ist, wobei die erste Reihe von Spulen unabhängig von der zweiten Reihe von Spulen mit einer Wechselspannung beaufschlagbar ist, wobei sich die erste Reihe und die zweite Reihe bevorzugt parallel zueinander erstrecken.

Alternativ wäre es auch denkbar, dass die einzelnen Reihen (zumindest teilweise) Spulen aufweisen, die sich entlang dieser Reihen erstrecken. Dabei wäre es denkbar, dass sich die einzelnen Reihen geradlinig erstrecken, es wären jedoch auch andere Verläufe dieser Reihen denkbar, insbesondere gekrümmte und/oder abgewinkelte Verläufe. Bevorzugt sind jedoch die Reihen auch bei derartigen gekrümmten und/oder abgewinkelten Verläufen zumindest teilweise parallel zueinander angeordnet, so dass der Begriff der Parallelität nicht nur unter Bezug auf geradlinige Verläufe zu verstehen ist.

Bevorzugt sind die Spulen auf den Träger, der bevorzugt als Leiterplatine ausgeführt ist, aufgedruckt. Bei einer weiteren vorteilhaften Ausführungsform sind auf der Platine auch Kondensatoren angeordnet, die besonders bevorzugt wenigstens teilweise mit den Spulen elektrische Schwingkreise ausbilden. Bei einer weiteren vorteilhaften Ausführungsform verlaufen die Windungen wenigstens zweier Spulen gegenläufig. Es wäre jedoch auch denkbar, dass (je nach Betrachtungsweise) lediglich eine Spule vorgesehen ist, die jedoch derart gewickelt (bzw. aufgetragen) ist, dass sich gegenläufige und bevorzugt auch zueinander versetzte Wicklungen ergeben. Bei einer weiteren vorteilhaften Ausführungsform verlaufen die Windungen wenigstens zweier Spulen, die in der gleichen Reihe von Spulen angeordnet sind, gegenläufig. Bevorzugt sind die Spulen einer Reihe wenigstens teilweise zueinander in Serie oder parallel geschaltet. Bevorzugt sind wenigstens drei Reihen von Spulen vorgesehen, besonders bevorzugt wenigstens vier Reihen von Spulen. Besonders bevorzugt weisen zwei benachbarte Reihen von Spulen einen Abstand von wenigstens 4mm, bevorzugt von wenigstens 6mm zueinander auf.

Die vorliegende Erfindung ist weiterhin auf ein Verfahren zum Erfassen von Objekten gerichtet, wobei wenigstens ein Schaltkreis bzw. Schwingkreis mit wenigstens einer und bevorzugt mit wenigstens zwei Spulen und/oder wenigstens einem Kondensator von einem Signalgenerator mit einer Wechselspannung beaufschlagt wird und wenigstens eine weitere für diesen Schaltkreis bzw. Schwingkreis charakteristische Größe gemessen wird. Dabei wird in Abhängigkeit von dieser weiteren für diesen Schwingkreis charakteristischen Größe festgestellt, ob in der Umgebung des elektrischen Schwingkreises ein gegenüber diesem Schwingkreis insbesondere bewegliches (d.h. insbesondere nicht einen bestimmungsgemäßen Bestandteil einer entsprechenden Erfassungsvorrichtung bildenden) Objekt befindlich ist. Insbesondere handelt es sich auch verfahrensseitig besonders bevorzugt um einen Fremdkörper, der nicht bestimmungsgemäß in der Umgebung des besagten Schaltkreises bzw. Schwingkreises ist.

Vorteilhaft wird zur Erfassung der Objekte eine Frequenz des Signalgenerators verändert und insbesondere diejenige Frequenz, mit der der wenigstens eine Schwingkreis beaufschlagt wird. Vorzugsweise wird die Frequenz in einem vorgegebenen Frequenzbereich bzw. Frequenzband durchgestimmt.

Bevorzugt werden wenigstens zwei parallel oder in Serie geschaltete Spulen betrieben bzw. mit der Wechselspannung beaufschlagt. Vorteilhaft werden wenigstens zwei Schwingkreise insbesondere sequentiell, d. h. in Abfolge von der Wechselspannung bzw. dem Frequenzgenerator betrieben.

Bei einem weiteren bevorzugten Verfahren wird eine Rückflussdämpfung (Rückflussdämpfung = return loss) bestimmt, was dem unten noch genauer erläuterten Wert $S_{11}$ entspricht. Daneben oder kummulativ kann auch die Durchgangsspannung berücksichtigt werden, welche sich aus dem unten noch genauer erläuterten Wert $S_{21}$ ergibt. Es wird darauf hingewiesen, dass die hier erwähnten S- Parameter direkt mit dem Impedanzverhalten des Schwingkreises zusammenhängen so dass bei oder in der Umgebung der Resonanzfrequenz das signifikanteste S-Parameter-Verhalten auftritt.

Bei einem weiteren bevorzugten Verfahren wird eine Eigenfrequenz des Schwingkreises, insbesondere auch in Abhängigkeit von der Anwesenheit des zu erfassenden Objekts bestimmt.

Weitere Vorteile und Ausführungsformen ergeben sich aus den beigefügten Zeichnungen:
Darin zeigen:

Fig. 1        einen grundsätzlichen schematischen Aufbau einer erfindungsgemäßen Vorrichtung;

Fig. 2        Eine Darstellung eines Vierpols;

Fig. 3a - 3j    Möglichkeiten zur Realisierung eines Messschaltkreises;

Fig. 4a - 4e    typische Verläufe bei unterschiedlichen Messschaltkreisen;

Fig. 5a, 5b    zwei Ausgestaltungen für Spulen;

Fig. 6a, 6b    zwei Ausgestaltungen für Kondensatoren;

Fig. 7a - 7c    drei Ausführungsformen für Messeinrichtungen;

Fig. 8        eine schematische Darstellung einer Messanordnung für eine $S_{11}$ und $S_{21}$-Messung;

Fig. 9a - 9d    vier Darstellungen von möglichen Realisierungen von Messanordnungen;

Fig. 10a - 10f    sechs weitere Darstellungen zur Realisierung von Messanordnungen;

Fig. 11        ein Ablaufdiagramm für ein erfindungsgemäßes Verfahren;

Fig. 12        eine Darstellung zur Veranschaulichung der Auswertekriterien;

Fig. 13        ein Blockdiagramm für eine erfindungsgemäße Messanordnung;

Fig. 14        eine weitere Darstellung eines Ablaufdiagramms;

Fig. 15a, b    zwei Darstellungen zur Veranschaulichung einer Einbausituation;

Fig. 16        ein Schaltbild zweier galvanisch getrennter Spulen;

Fig. 17        eine Darstellung zweier galvanisch getrennter Spulen; und

Fig. 18        eine Darstellung von an einem Träger angeordneten Spulen.

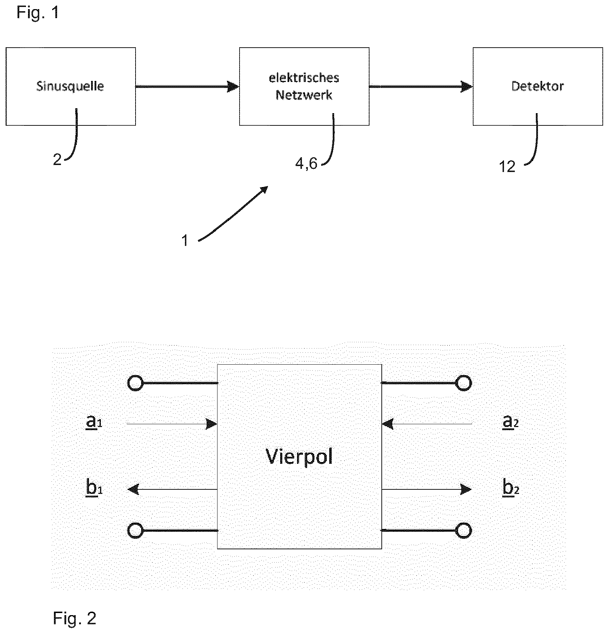

Figur 1 zeigt einen grob schematischen Aufbau einer Vorrichtung zur Objekterkennung. Diese weist drei grundsätzliche Bestandteile auf, nämlich einen Signalgenerator 2, hier in Form einer Sinusquelle, ein elektrisches Netzwerk 1 bzw. den oben erwähnten Schaltkreis, der auf Objekte reagiert und eine Sensoreinrichtung 12 bzw. einen Detektor. Der Frequenzgenerator bzw. die Sinusquelle dient als Signalquelle und erzeugt bevorzugt ein periodisches Sinussignal. Dabei kann der Signalgenerator beispielsweise als Oszillator ausgeführt sein. Daneben wäre es auch denkbar, dass der Frequenzgenerator breitbandig mit variablen Frequenzen ausgeführt ist, beispielsweise als Frequenzsynthesizer.

Das elektrische Netzwerk bzw. der Schaltkreis ist das zentrale Sensorelement. Dieses weist wenigstens ein elektrisches Bauelement auf oder aber eine Kombination aus Bauelementen, deren Impedanzen bzw. Wellenwiderstände durch Objektannäherung verändert werden. Dabei handelt es sich beispielsweise um Spulen, Kondensatoren, Parallelschwingkreise oder Reihenschwingkreise. Dieser Schaltkreis bzw. das Netzwerk kann etwa als Eintor, Zweitor, Vierpol oder allgemein Mehrtor (bzw.: "Mehrpol") ausgeführt werden. Der Detektor bzw. die oben genannte Sensoreinrichtung übernimmt die Signalaufnahme und Aufbereitung des Signals. Auch hier sind mehrere Ausführungen möglich. So weist diese Sensoreinrichtung erfindungsgemäß einen Richtkoppler auf. Die Sensoreinrichtung kann einen logarithmischen Verstärker, einen Gleichrichter oder einen AD-Wandler mit Stützstellen (mit kontinuierlicher Abtastung) aufweisen Auch sind verschiedene Kombinationen hieraus oder die Verwendung mehrerer der genannten Einrichtungen möglich.

Im Folgenden wird die Erfindung unter Bezugnahme auf Vierpole beschrieben.

Generell lassen sich derartige Vierpole als $\underline{Z}$-, $\underline{Y}$- und $\underline{H}$- Matrizen beschreiben. Allerdings gestaltet sich deren messtechnische Ermittlung als schwierig, so dass in der Praxis üblicherweise auf eine Darstellung von Streuparametern (S-Parameter) zurückgegriffen wird, die in der Nachrichtentechnik typischerweise mittels Netzwerkanalysatoren erfasst werden. Derartige $\underline{S}$- Parameter beschreiben das Reflexions- und Transmissionsverhalten des Vierpols in einem Bezugssystem. Dabei kann beispielsweise ein Widerstand von 50 Ohm zugrunde gelegt werden. Diese Parameter sind als solche dimensionslos, da sie immer das Verhältnis zwischen einer auslaufenden zu einer einlaufenden Schwingung darstellen. In einer entsprechenden in Figur 2 gezeigten Darstellung wird ein derartiger Vierpol veranschaulicht. Dabei bezeichnen $\underline{a}_1$ und $\underline{a}_2$ einlaufende Wellen und $\underline{b}_1$ sowie $\underline{b}_2$ reflektierte bzw. auslaufende Wellen. Die Streumatrix kann dabei folgende Gestalt aufweisen:

$$S = \begin{pmatrix} \underline{S}_{11} & \underline{S}_{12} \\ \underline{S}_{21} & \underline{S}_{22} \end{pmatrix}$$

Dabei bedeuten:

$\underline{S}_{11}$  Reflexionsfaktor am Eingangstor 1
$\underline{S}_{22}$  Reflexionsfaktor am Ausgangstor 2
$\underline{S}_{21}$  Transmissionsfaktor von Tor 1 nach Tor 2
$\underline{S}_{12}$  Transmissionsfaktor von Tor 2 nach Tor 1.

Da sich die $\underline{S}$- und $\underline{Z}$- Parameter direkt ineinander umrechnen lassen, sind für den gesamten Sensoreinsatzbereich Vierpole von Nöten, deren Impedanzen $\underline{Z}$ sich bei Objektnäherung verändern oder verstimmen lassen.

Eine genaue Kenntnis dieser Impedanzverläufe der zu verwendenden Mehrpole ist für das Design der Netzwerke oder Schaltkreise erforderlich, da sie detaillierte Vorhersagen über die zu erwartende Sensorperformance ermöglichen.

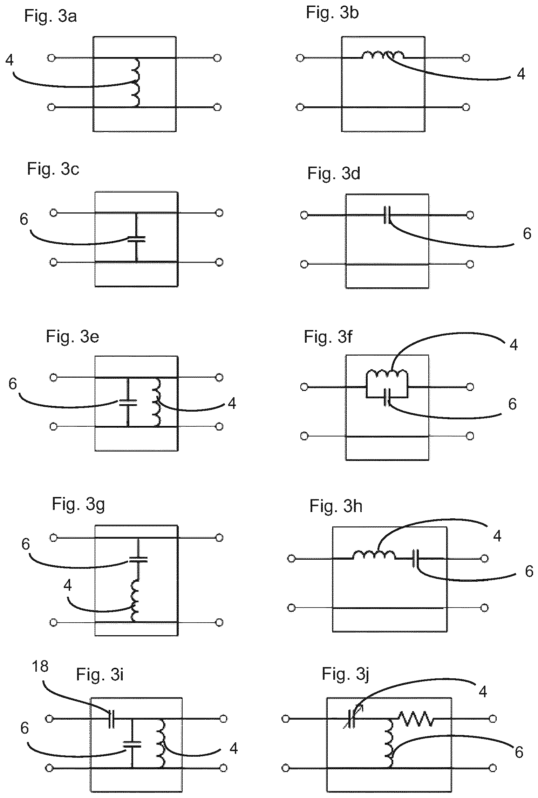

Die Figuren 3a - 3j zeigen Beispiele von Netzwerken bzw. verwendbaren Schaltkreisen. Es wird darauf hingewiesen, dass jedoch auch andere Netzwerke bzw. Schaltkreise denkbar wären. Figur 3a zeigt die Verwendung einer Spule 4. Durch angenäherte Objekte kann vorwiegend die Induktivität der Spule verändert werden, beispielsweise erhöht ein annähernder Ferrit deren Induktivität. Daneben oder zusätzlich ist jedoch auch eine kapazitive Einkopplung möglich In Figur 3b ist ebenfalls eine Spule gezeigt, die jedoch in Serie geschalten ist. Figur 3c zeigt einen Kondensator. Durch angenäherte Objekte kann vorwiegend dessen Kapazität verändert werden. So erhöht beispielsweise Glas als Dielektrikum die Kapazität ca. um den Faktor 6. In Figur 3d ist der Kondensator wieder in Serie geschaltet.

Die Figuren 3e und 3f zeigen jeweils Parallelschwingkreise (die bei Fig. 3e parallel und bei Fig. 3f in Serie geschaltet sind), bei denen die Sperrwirkung bei der Resonanzfrequenz kennzeichnend ist. In diesem Fall tritt eine sehr hohe Impedanz auf. In den Figuren 3g und 3h sind Serienschwingkreise dargestellt, bei denen eine niedrige Impedanz bei Resonanzfrequenz kennzeichnend ist. In Fig. 3g ist der Serienschwingkreis parallel und bei Fig. 3h in Serie geschaltet.

Die Figuren 3i und 3j zeigen komplexere Schaltkreise bzw. Netzwerke. Diese Schaltkreise bestehen aus mehr als zwei passiven Bauteilen, so dass hier bevorzugt auch das Impedanz- und Streuparameterverhalten fein eingestellt werden kann. Bevorzugt sind bei derartigen Schaltkreisen Punkte veränderbar, wie etwa eine mehr oder weniger große Güte, d.h. eine mehr oder weniger große Sensitivität bzw. eine mehr oder weniger gegebene Schmalbandigkeit und auch eine mehr oder weniger gegebene Robustheit. Daneben ist durch diese Vorgehensweise bevorzugt auch eine Resonanz- oder Arbeitsfrequenz einstellbar.

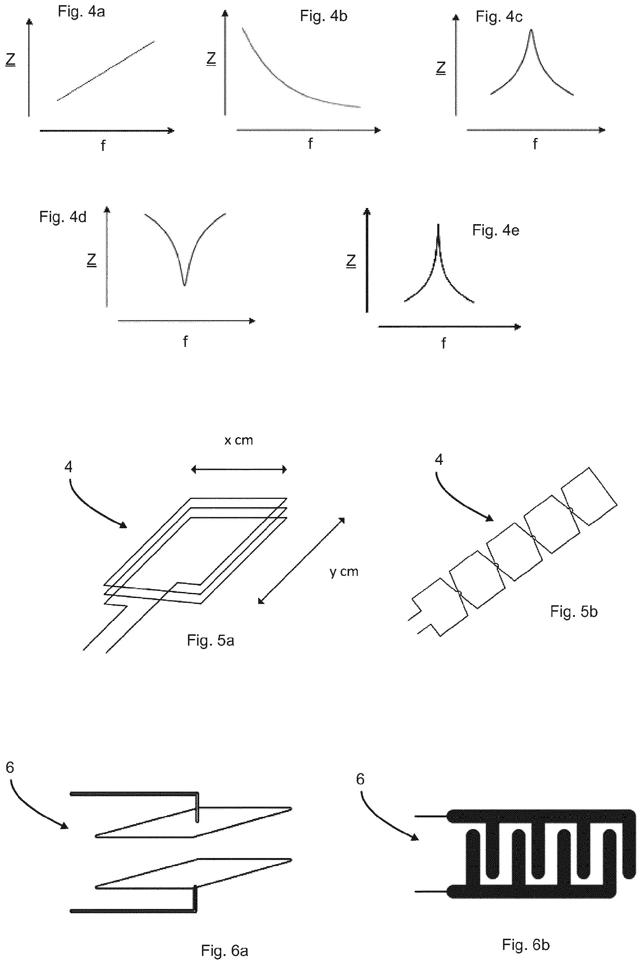

Die Figuren 4a - 4e zeigen typische Impedanzverläufe von einigen der in Figuren 3a - 3j gezeigten Schaltkreise. Dabei bezieht sich Figur 4a auf den Impedanzverlauf einer Spule, Figur 4b auf den Impedanzverlauf einer Kondensators, Figur 4c auf den Impedanzverlauf eines Parallelschwingkreises, Figur 4d auf den Impedanzverlauf eines Serienschwingkreises (siehe Figuren 3g, 3h) und Figur 4e auf komplexere Netzwerke, wie etwa den Schaltkreis in Figur 3j.

Besonders geeignet für die hier beschriebene Anwendung sind Schwingkreise, da deren Impedanzverhalten charakteristische Impedanzspitzen aufweisen und damit die Sensitivität der Sensoreinrichtung stark erhöhen. Bei Schwingkreisen koppeln angenäherte Objekte sowohl kapazitiv als auch induktiv ein. Welche Einkopplungsart dabei favorisiert werden soll, hängt von frei wählbaren Faktoren, wie der Frequenz und der Dimensionierung von L und C ab. Komplexere Netzwerke bieten deutlich mehr Freiheitsgrade beim Design hinsichtlich des gewünschten Einsatzfalles. So kann beispielsweise der in Figur 3i gezeigte Schaltkreis z.B. durch den zusätzlichen Koppelkondensator 18 eine höhere Güte aufweisen und damit auch eine schärfere Resonanz als bei dem Schaltkreis aus Figur 3e.

Daneben können, wie in Figur 3j gezeigt, auch veränderliche Bauteile eingesetzt werden, wie Trimmkondensatoren, Varicap-Dioden, Trimmpotis und dergleichen. Auch diese erlauben eine Feinjustage oder eine Veränderung im Betrieb (genauer gesagt können mittels dieser Elemente Parameter sogar während des Betriebs verändert werden).

Daneben wäre es möglich, zusätzliche Ohm'sche Widerstände, wie in Fig. 3j gezeigt, einzusetzen, welche die Güte bzw. die Resonanzschärfe verringern (Q <30) und so jedoch die Robustheit erhöhen.

Netzwerke, insbesondere komplexere Netzwerke weisen daneben Filtercharakteristiken auf. Sie sind dadurch in der Lage, unerwünschte Störsignale (beispielsweise durch Einstrahlung beim induktiven Laden) abseits der Resonanzfrequenz herauszufiltern und können weitere Filter so überflüssig machen.

Besonders geeignet sind Schaltkreise, deren Impedanzverlauf an einem (oder auch mehreren) markanten Punkten (z.B. bei Schwingkreisen die Resonanzspitze) optimal an ein Bezugssystem angepasst sind. Bevorzugt wird hier eine Anpassung an einen 50 Ohm-Standard verwendet.

Wenn man beispielsweise von einem Netzwerk bzw. einem Schaltkreis mit einer Resonanzimpedanz des Schwingkreises von 50 Ohm ausgeht ($|\overline{Z}(f_{Res})|$=50 Ohm) dann wäre das Eingangstor optimal an eine Wellenimpedanz von 50 Ohm Zuleitungen angepasst. Dies würde sich in einem spitzen Verlauf einer S11-Messung widerspiegeln.

Die Figuren 5a und 5b zeigen zwei mögliche Ausführungen von Spulen. Da - wie oben erwähnt - die Netzwerke bzw. Schaltkreise, insbesondere Schwingkreise den eigentlichen Sensor darstellen, gibt es, um die durch Objektannäherung angestrebte Impedanzveränderung gewährleisten bzw. messen zu können, je nach Einsatzbereich mehrere Möglichkeiten, die wesentlichen passiven Bauteile, wie Spulen und Kondensatoren, zu realisieren. Bei Figur 5a ist die Spule 4 als flächige Spule ausgeführt. Diese Art der Spule eignet sich insbesondere für den Einsatzbereich des induktiven Ladens. Figur 5b zeigt eine Darstellung einer Spule für induktives Laden, die hier als auskompensiert bezeichnet werden kann. Man erkennt, dass bei der in Figur 5b gezeigten Darstellung die Windungen in den einzelnen Segmenten jeweils gegenläufig sind. Auf diese Weise wird eine derartige Spule nicht durch das magnetische Feld einer Primärspule beeinflusst. Mit anderen Worten sind hier zwischen den Spulen Überschläge angeordnet, mittels derer die über die Fläche gemittelte magnetische Einkopplung des Ladefelds bei Null gehalten werden soll.

Bei insbesondere der in Figur 5b gezeigten Spule, jedoch auch bei der in Figur 5a gezeigten Spule bestehen unterschiedliche Variationsmöglichkeiten. So kann eine Variation über die Windungszahl n erreicht werden, über die eigentliche Geometrie der Spule, über die Ausführung als Drahtwicklung oder als elektrisch leitende Struktur in planarer Ausführung, bspw. als Leiterplattendruck (PCB). Daneben können unterschiedliche geometrische Formen gewählt werden, wie Kreise, Vielecke, gestreckte Ausführungen (z.B. eine Zylinderspule) und dergleichen.

Die Figuren 6a und 6b zeigen Möglichkeiten für den Kondensator 6 bzw. dessen Ausführung. So könnte beispielsweise der in Figur 6a gezeigte Kondensator als Plattenkondensator ausgeführt sein. Daneben könnte der Kondensator - wie in Figur 6b gezeigt - eine PCB (printed circuit board)- Struktur aufweisen. Variationsmöglichkeiten für den Kondensator sind gegeben durch die Plattengröße, den Plattenabstand, die Wahl eines Dielektrikums oder durch eine planare Ausführung, z.B. als Leiterplattendruck. Daneben können auch unterschiedlichste Mäanderstrukturen gewählt werden, um insbesondere die Kapazität zu beeinflussen.

Für flächendeckende Sensoranwendungen (bei einer Größenordnung im/ nahe dem m²- Bereich) eignet sich die serielle Abfrage mehrerer benachbarter Schwingkreise, insbesondere mittels eines Multiplex-Verfahrens.(mehrere Spulen werden insbesondere dann vorgesehen, wenn flächendeckend kleine Objekte erkannt werden sollen, ansonsten könnte auch eine große Spule verwendet werden) Bei der Verwendung von mehreren, seriell angeordneten Schwingkreisen wäre es bevorzugt, die Schwingkreise auf unterschiedliche Resonanzfrequenzen einzustellen, so dass gegenseitiges Übersprechen und damit Sensitivitätseinbußen unterdrückt werden. So können beispielsweise zu einander benachbarte Schwingkreise auf unterschiedliche Resonanzfrequenzen eingestellt sein. Auch wäre es möglich, beispielsweise n verschiedene Resonanzfrequenzen auszuwählen, die sich in n aufeinanderfolgenden Schwingkreisen bzw. Schaltkreisen miteinander abwechseln. Bevorzugt weist die Anordnung daher wenigstens zwei Schwingkreise auf, die besonders bevorzugt unabhängig voneinander schaltbar bzw. ansprechbar sind. Bevorzugt unterscheidet sich eine Resonanzfrequenz dieser beiden Schwingkreise.

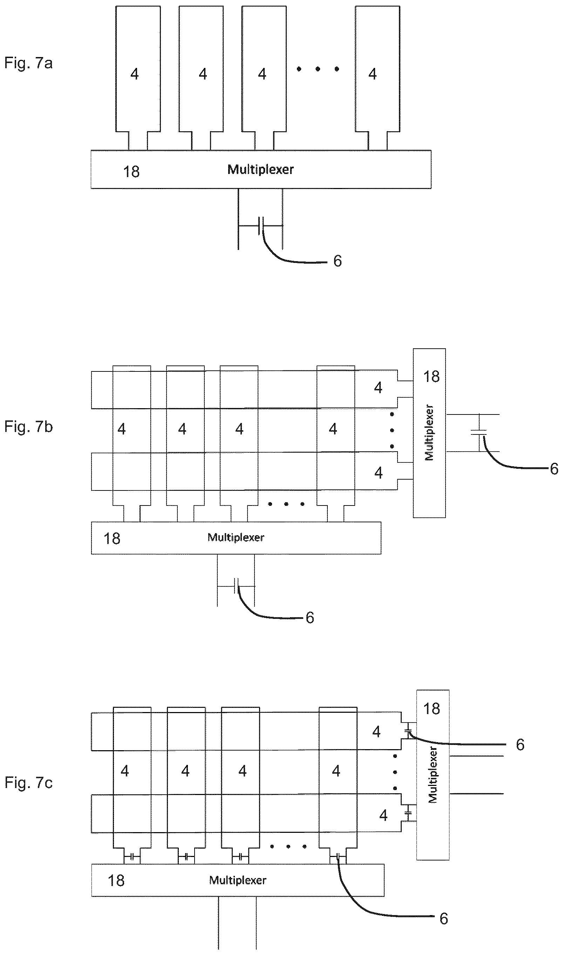

Die Figuren 7a - 7c zeigen drei Darstellungen derartiger Sensoranordnungen. Daneben wären jedoch auch Anordnungen denkbar (nicht gezeigt), in der aber jeder Schwingkreis schon seinen eigenen Kondensator 6 aufweist und bei denen ggfs. der "Zentralkondensator" wegfallen würde.

Bei der in Figur 7a gezeigten Darstellung sind mehrere Spulen 4 parallel zueinander angeordnet. Das Bezugszeichen 18 kennzeichnet einen (beispielsweise bidirektionalen) Multiplexer, der dazu geeignet und bestimmt ist, die einzelnen Spulen und damit die Schwingkreise nacheinander anzusprechen. Das Bezugszeichen 6 bezieht sich hier auf den Kondensator, der Bestandteil dieser einzelnen Schwingkreise ist und entsprechend mit dem Multiplexer verschaltet wird. Dadurch könnte es sich hier bei dem Kondensator 6 um einen Plattenkondensator handeln. Dieser Kondensator kann hier Bestandteil aller Schwingkreise sein. Dies ist eher eine konzeptionelle Frage, die sich insbesondere danach richtet, ob eher die Spule des Schwingkreises oder eher der Kondensator als empfindlicher d.h. auf den Fremdkörper reagierender Part ausgeführt wird. Eine Hybridausführung, bei der sowohl der Kondensator als auch die Spule reagieren, ist denkbar.

Figur 7b zeigt eine weitere Ausführungsform einer Sensoranordnung. Bei dieser Ausführungsform sind sowohl in der vertikalen Richtung mehrere Spulen nebeneinander angeordnet als auch in einer horizontalen Richtung. Diese Ausgestaltung der Sensoreinrichtung erlaubt sogar eine genaue Positionsbestimmung beispielsweise eines Fremdkörpers. Auch hier können durch die beiden Multiplexer 18 jeweils die einzelnen Spulen nacheinander bestromt bzw. abgefragt werden. So kann beispielsweise festgestellt werden, wenn sich ein Objekt im Bereich der zweiten Spule von links befindet und auch im Bereich der zweiten Spule von oben. Auf diese Weise ist eine genauere Positionserfassung möglich.

Bei der in Figur 7c gezeigten Realisierung sind jeweils die einzelnen Kondensatoren parallel zu den Spulen geschaltet und jeder einzelne Schwingkreis weist jeweils eine Spule und einen Kondensator auf. Auch hier sind zwei Multiplexer vorgesehen, um in horizontaler und in vertikaler Richtung abzutasten.

In den nachfolgenden Figuren werden Beispiele für die jeweiligen Detektoren 12 bzw. Messschaltungen (bei diesen Messschaltungen handelt es sich im die oben beschriebene Sensoreinrichtung, welche charakteristische Größen des Schaltkreises erfassen kann) gegeben. Generell ist die vollständige Erfassung aller Streuparameter eines Vierpols sehr aufwendig und benötigt Gerätschaften, wie Netzwerkanalysatoren. Falls jedoch die Betrachtung des Netzwerkes auf ausgewählte Parameter beschränkt wird, so nimmt die Messschaltung ein überschaubares Ausmaß an und lässt sich besonders bevorzugt auch diskret aufbauen.

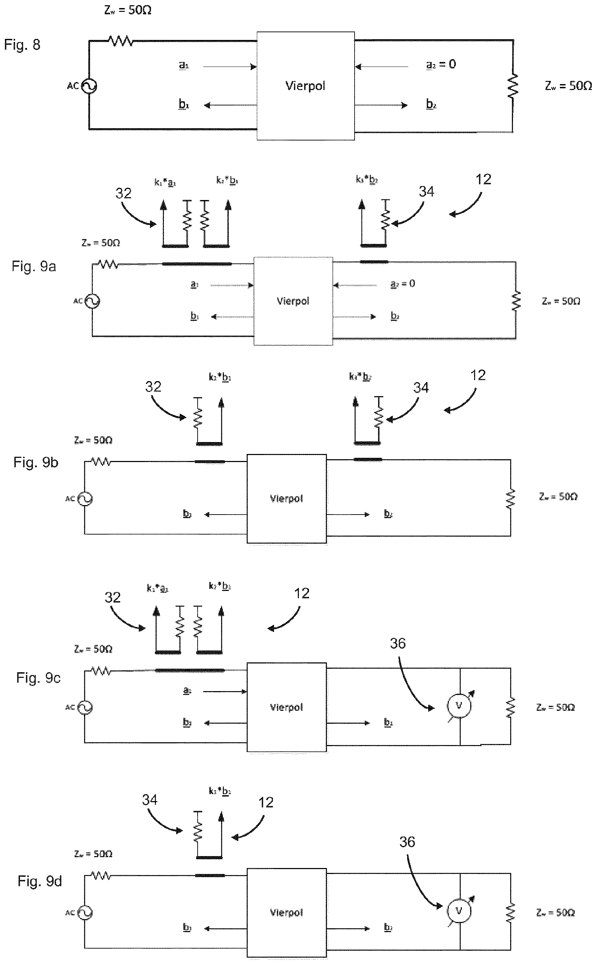

In Figur 8 ist eine Vorgehensweise dargestellt, bei der ausschließlich eine Betrachtung der $\underline{S}_{11}$- und $\underline{S}_{21}$-Parameter erfolgt. Die weiteren($\underline{S}_{22}$- und $\underline{S}_{12}$-) Parameter bedeuten unter Umständen (v.a., wenn die Torbedingung erfüllt ist) verglichen mit den $\underline{S}_{11}$- und $\underline{S}_{21}$- Parametern lediglich die spiegelbildliche Betrachtung eines Vierpols. Damit ist diese Vorgehensweise deutlich kostengünstiger als die Ermittlung aller Streuparameter. Daneben ist auch eine zeitlich gesehen schnellere Auswertung möglich. Wie auch in Figur 8 gezeigt, wird wieder eine sinusförmige Eingangsspannung auf den Schaltkreis bzw. Vierpol gegeben. Zu einer vollständigen Ermittlung der $\underline{S}_{11}$- und $\underline{S}_{21}$- Parameter müssten die Wellen $\underline{a}_1$, $\underline{b}_1$ und $\underline{b}_2$ erfasst werden.

Figur 9a zeigt eine mögliche Realisierung einer Messschaltung. Konventionell werden im Rahmen der Messschaltung sogenannte Richtkoppler eingesetzt. Bei diesen Bauteilen handelt es sich um elektrisch passive Bauelemente, die dazu dienen, eine als geführte Welle beschriebene elektromagnetische Leistung abzuzweigen bzw. in eine Leiterstruktur ein- und auszukoppeln.

Bei der in Figur 9a gezeigten Messschaltung kommt ein Bidirektionalkoppler 32 zur Auskopplung eines Teils von $\underline{a}_1$ und $\underline{b}_1$ zum Einsatz sowie ein Unidirektionalkoppler 34 zum Auskoppeln eines Teils von $\underline{b}_2$. Die Faktoren k1, k2 und k3 geben jeweils den ausgekoppelten Anteil an. Der Nachteil beim Einsatz dieser Richtkoppler ist, dass diese oft eine hohe Koppeldämpfung (von ca. -10 bis -20 db) aufweisen, mit der die Signale beim Auskoppeln gedämpft werden. Daneben stellen Richtkoppler auch einen hohen Kostenfaktor dar.

Die Richtkoppler bilden jedoch bei den in den Fig. 9a - 10b gezeigten Darstellungen Bestandteile der in ihrer Gesamtheit schematisch mit 12 bezeichneten Sensoreinrichtung. Im Rahmen der vorliegenden Anmeldung wird daher der Begriff Erfassungseinrichtung insbesondere für den wenigstens einen Schwingkreis und/oder Schaltkreis verwendet, dessen Eigenschaften durch die Anwesenheit eines Fremdkörpers verändert werden, und der Begriff Sensoreinrichtung für diejenige Einrichtung, welche diese Veränderung der Eigenschaft erkennt und/oder auswertet.

Figur 9b zeigt eine erste Abwandlung der in Figur 9a gezeigten Messschaltung. Hier kommen zwei Unidirektionalkoppler 34 zum Einsatz, wobei durch diese beiden Unidirektionalkoppler die Teile von $\underline{b}_1$ und $\underline{b}_2$ ausgekoppelt werden. Diese Vorgehensweise beruht auf der Überlegung, dass eine Quotientenbildung aus ausfallender zu ausgesendeter (von dem Frequenzgenerator) Welle nicht zwingend nötig ist, da in den meisten Anwendungsfällen die ausgesendete Leistung ohnehin konstant ist und daher als bekannt vorausgesetzt werden kann. In diesem Falle kann eine Erfassung der ausfallenden Wellen ausreichen.

Daneben könnte auch - wie in Figur 9c gezeigt - ein Bidirektionalkoppler 32 zum Einsatz kommen, der faktoristische Werte für $\underline{a}_1$ und $\underline{b}_2$ auskoppelt. Genauer gesagt wird hier die Auskopplung durch Richtkoppler im Speziellen bei der $\underline{b}_2$- Messung umgangen. So kann hier nämlich der Sinusverlauf bzw. der Spannungsverlauf an einem 50 Ohm- Widerstand (allgemeiner Abschlusswiderstand) mittels eines Messgerätes 36 abgetastet werden. Der Sinusverlauf kann alternativ vorher auch durch Gleichrichtung in ein DC- Signal umgewandelt werden und dann erst gemessen werden.

Bei der in Figur 9d gezeigten Darstellung wird wiederum auf die Auskopplung des A1-Anteils verzichtet, jedoch wird wieder der Spannungsverlauf mit der Messeinrichtung 36 aufgenommen.

Wie in den Figuren 10a - 10f gezeigt, ist eine weitere Vereinfachung möglich, indem man sich entweder nur mit der $\underline{S}_{11}$ oder $\underline{S}_{21}$- Messung oder einzelner Wellen begnügt. Auch hier sind wieder mehrere Möglichkeiten gegeben, um die Messwerte zu erzeugen. Üblicherweise wird in der Nachrichtentechnik so vorgegangen, dass die einfallende bzw. ausgehende Welle (AC) über den Koppelzweig des Richtkopplers ein gedämpftes Signal (AC) liefert und dieses wiederum über einen logarithmischen Verstärker in ein DC- Signal umgewandelt wird. Wie gesagt, verfügen handelsübliche Richtkoppler für diese Anwendung über eine Kopplungsdämpfung von ca. -10 bis -20 db, mit der sie die Messsignale dämpfen. Falls die ausgehende Welle genügend Pegel bietet, kann auch eine Gleichrichtung erfolgen. So könnte beispielsweise die ausgehende Welle über eine Gleichrichterschaltung in ein DC-Signal umgewandelt werden. Daneben wäre es auch denkbar, insbesondere bei niedrigen Frequenzen, eine komplette Abtastung der ausgehenden Welle durchzuführen. Für die oben genannten ersten beiden Punkte erhält man DC-Werte, die sich bei breitbandiger Auswertung auch als Funktion der Frequenz darstellen lassen.

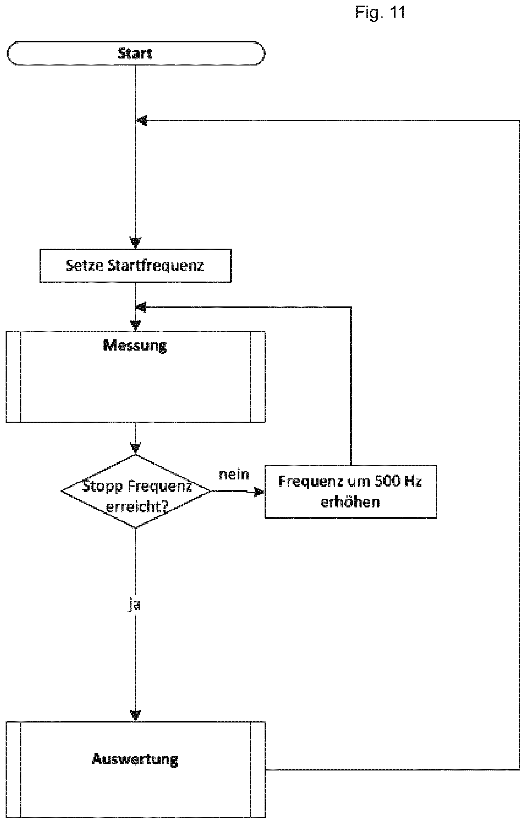

Figur 11 zeigt eine vereinfachte Darstellung der Auswertung bzw. einer Messwertaufnahme bei breitbandiger Messung. Falls eine Messung breitbandig erfolgt, ergeben sich viele Möglichkeiten zur Auswertung bei der Analyse des frequenzabhängigen Verhaltens eines Netzwerkes. So wird zunächst eine Startfrequenz gesetzt, anschließend wird eine Messung durchgeführt (beispielsweise die Messung eines Leistungspegels) (z.B. einer ausgehenden Welle) durch ADC - Messen und - Abspeichern. Falls die Stoppfrequenz erreicht ist, erfolgt eine Gesamtauswertung. Falls nicht, wird die Frequenz beispielsweise um 500 Hz erhöht. Nach Abschluss der Gesamtauswertung kann die Messroutine erneut ggf. mit veränderten Start-/Stoppfrequenzen durchlaufen werden.

Mit anderen Worten beginnt der Frequenzgenerator bei einer Startfrequenz und sendet auf dieser seine Sinuswellen zu dem Netzwerk bzw. dem Schaltkreis hin aus. Je nach Messaufbau wird die Leistung der reflektierten und/oder durchgehenden Welle und ggf. noch der einfallenden Welle detektiert. Ist diese Messung abgeschlossen, erhöht der Frequenzgenerator seine Frequenz (beispielsweise um 500 Hertz) und es wird eine erneute Pegelmessung durchgeführt. Diese Schleife wird so oft wiederholt, bis eine gewählte Stopfrequenz erreicht ist. Das breitbandige Frequenzverhalten eines Netzwerkes kann so nachempfunden werden.

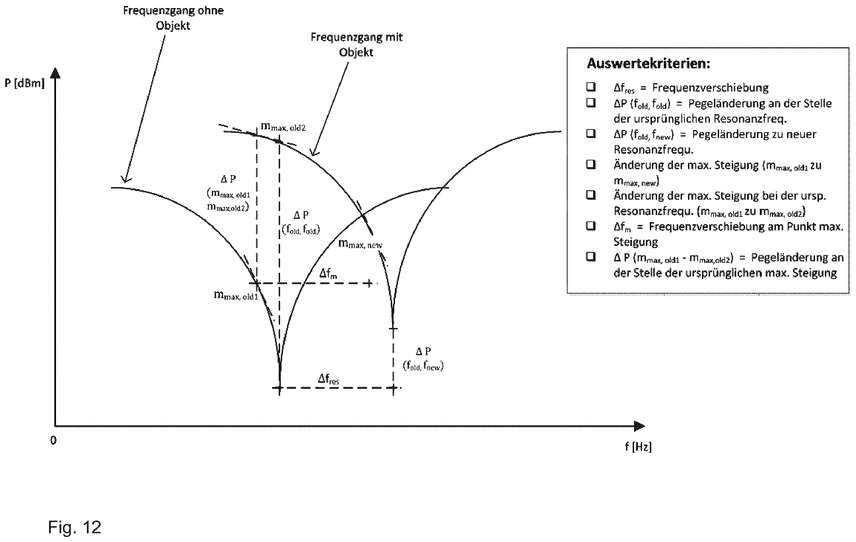

Figur 12 zeigt eine mögliche Auswertung bzw. die Auswertekriterien. Veränderungen im Frequenzverhalten eines Netzwerkes lassen Rückschlüsse auf die Anwesenheit eines Fremdobjektes zu. Abbildung 12 zeigt, wie ein veränderter Frequenzgang aussehen kann und zeigt insbesondere markante Messpunkte. So kann

beispielsweise eine Frequenzverschiebung $\Delta f_{res}$ gemessen werden. Daneben kann auch eine Pegeländerung $\Delta P$ ($f_{old}$, $f_{old}$) an der Stelle der ursprünglichen Resonanzfrequenz gemessen werden. Auch kann eine Pegeländerung im Vergleich zu der neuen Resonanzfrequenz $\Delta P(f_{old}, f_{new})$ gemessen werden. Weiterhin ist es möglich, die maximale Steigung ($m_{max, old1}$ zu $m_{max, new}$). Weiterhin kann auch die maximale Steigung bei der ursprünglichen Resonanzfrequenz ($m_{max, old1}$ zu $m_{max, old2}$) gemessen werden. Schließlich ist auch die Messung einer Frequenzverschiebung an dem Punkt maximaler Steigung möglich, wie auch eine Messung der Pegeländerung $\Delta P$ ($m_{max, old1}$ - $m_{max, old2}$) an der Stelle der ursprünglichen maximalen Steigung möglich.

Für die hier beschriebene Anwendung der Fremdkörperdetektierung kann es insbesondere ausreichend sein, wenn einige wenige dieser Parameter bestimmt werden und aufgrund der bestimmten Werte eine Aussage über das Vorhandensein oder Nichtvorhandensein eines Fremdkörpers getroffen wird.

Daneben könnte auch ein eingebauter Phasendetektor Phasenverschiebungen von reflektierenden bzw. ausgehenden Wellen erkennen und als Auswahlkriterium heranziehen.

Die Anwendung einer derartigen Positions- oder Sensoreinrichtung zur Erfassung von Objekten ist vielseitig. So könnte ein derartiger Sensor beispielsweise in Sortieranlagen eingesetzt werden, insbesondere, wenn nach Größe oder Materialbeschaffenheit selektiert werden soll. Daneben wäre auch ein Einsatz in Metalldetektoren denkbar sowie auch eine Möglichkeit zum Erfassen von Bewegungsprofilen. Daneben könnten über die hier beschriebene Vorgehensweise auch ein Drucksensor, eine Abstandsmessung und eine Objekterkennung bei induktiven Ladesystemen eingesetzt werden. Daneben wäre auch ein Einsatz einer Torlinientechnik denkbar.

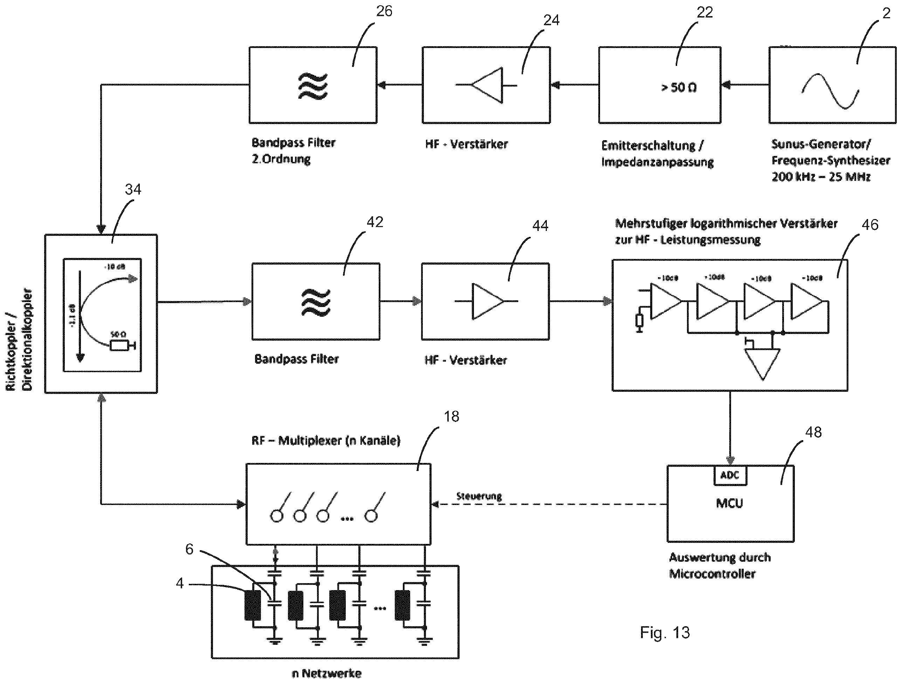

Figur 13 veranschaulicht die Gestaltung für ein Anwendungsbeispiel bei der Objekterkennung beispielsweise in induktiven Ladesystemen. Der Frequenzgenerator 2 erzeugt eine Sinusspannung. Dabei kann es sich hier beispielsweise um einen Frequenzsynthesizer handeln, der in einem Bereich von 200 Kilohertz und 25 Megahertz abstimmbar ist. Über eine Emitterschaltung 22 bzw. eine Impedanzanpassung wird das Sinussignal mit einem Hochfrequenzverstärker 24 verstärkt und mithilfe eines Bandpassfilters 26 gefiltert. Dieses Signal wird einerseits dem Richtkoppler zugeführt, andererseits dadurch auch über den Multiplexer 18 den einzelnen Schaltkreisen mit den Spulen 4 und den Kondensatoren 6. Deren Ausgangssignal wird wiederum rückgeführt zu dem Richtkoppler und der Richtkoppler koppelt entsprechende für die zu messenden Daten relevante elektrische Signale aus. Diese Signale werden wiederum mit einem Bandpassfilter 42 gefiltert und mit einem Verstärker 44 verstärkt. Ein mehrstufiger logarithmischer Verstärker 46 dient zur Hochfrequenzleistungsmessung. Diese Einrichtungen 42, 44, und 46 sind damit bevorzugt ebenfalls Bestandteile der Sensoreinrichtung 12. Eine Auswertung erfolgt durch einen Mikrocontroller 48. Dieser Mikrocontroller dient dabei auch zum Steuern des Multiplexers 18.

In diesem Beispiel wird die Reflexion an den Toren 1 (sinngemäß also $\underline{S}_{11}$) von n verschiedenen Netzwerken bestimmt. Die rückfließende Welle wird mittels eines Richtkopplers ausgekoppelt (die Objekterkennung ließe sich auch hier mittels einer $\underline{S}_{21}$- Messung umsetzen. Dabei würde der Richtkoppler entfallen und die Sensoreinrichtung würde sich an den Toren 2 der n verschiedenen Netzwerke befinden).

Die Netzwerkspulen sind hier bevorzugt als flächig ausgeführte PCB- Prints umgesetzt (wie oben dargestellt), wobei jede einzelne Spule die Gestalt, wie in Figur 5b gezeigt, aufweist. Als PCB- Print ausgeführt erhalten sie eine planare Gestalt, wie in Figur 5b gezeigt. Die einzelnen Spulen bzw. Schwingkreise alternieren dabei bevorzugt in ihren Resonanzfrequenzen, da so ein Übersprechen in die Nachbarspulen verringert wird.

Die Sensoreinrichtung erlaubt erfindungsgemäß auch die Erkennung von Lebendobjekten, da diese kapazitiv auf die Sensorspulen einkoppeln. In einem Ladebetrieb blocken weiter erfindungsgemäß die Entkoppelkondensatoren (als Bestandteil dieser Netzwerke) die induzierten Spannungen ab, so dass an den Richtkoppler keine Störspannungen gelangen. Auf diese Weise ist auch ein Sensorbetrieb während eines Ladezustands d.h. während des Betriebs der Primärspule ermöglicht.

Am Entkoppelzweig des Richtkopplers filtert ein Bandpass weitere Störsignale heraus. Über den HF-Verstärker und den anschließenden logarithmischen Verstärker 48 erfolgt die Signalaufbereitung, die letztlich bevorzugt in einem DC- Signal resultiert. Wie oben erwähnt, übernimmt die Prozessoreinheit 48 (wie bei einem Smart Sensor) die Signalverarbeitung.

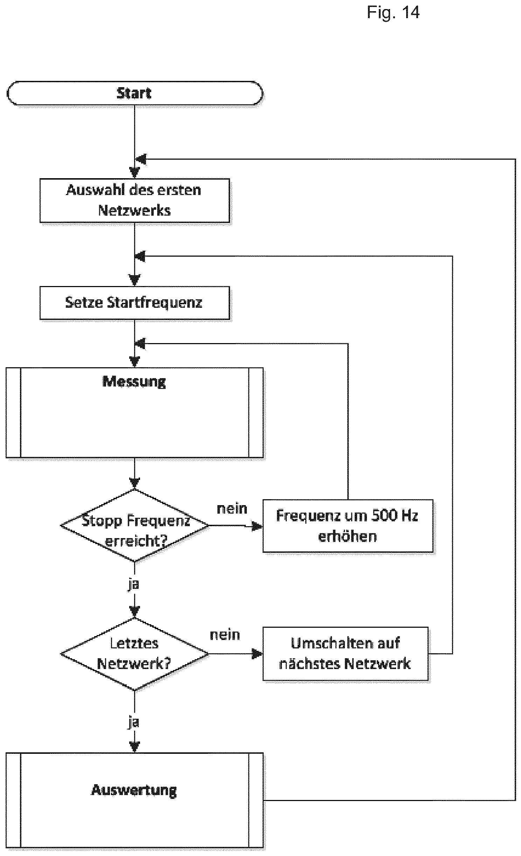

Fig. 14 zeigt eine weitere Darstellung eines möglichen Messablaufs. Diese Darstellung ist etwas detaillierter als die in Fig. 11 gezeigte. Insbesondere ist auch die weitere Schleife dargestellt, mittels derer die einzelnen Netzwerke bzw. Schaltkreise analysiert werden. Für jede Messung jedes Schaltkreises wird wiederum die Frequenz durchgestimmt ggf. mit sich ändernden Start- und Stoppfrequenzen.

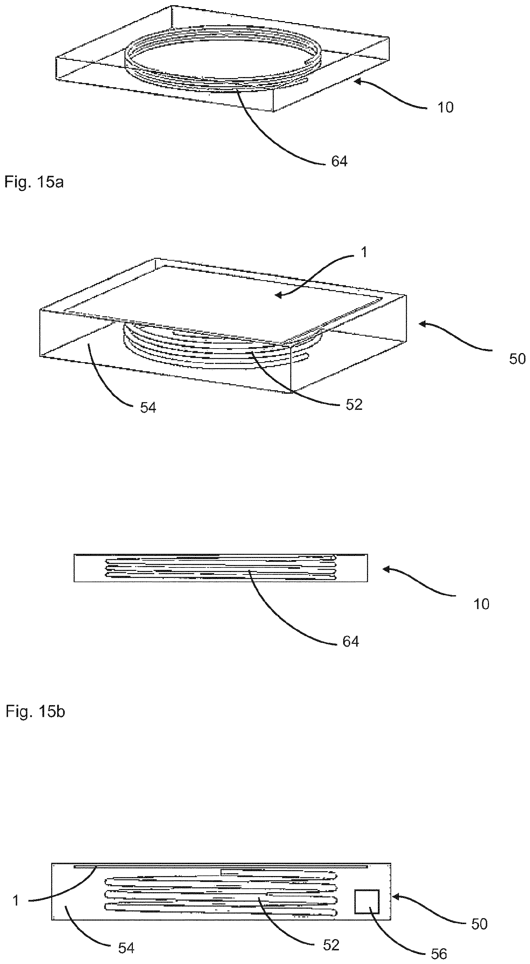

Die Figuren 15a - 15b zeigen zwei Ansichten einer möglichen Einbausituation. Dabei bezieht sich das Bezugszeichen 50 auf die gesamte Ladeeinheit (bzw. das. Primärmodul). Diese weist ein Gehäuse 54 auf, in dem eine Primärspule 52, die auch als Ladespule dient, angeordnet ist. Das Bezugszeichen 10 kennzeichnet das Sekundärteil, welches eine Sekundärspule 64 aufweist. Dieses Sekundärteil kann dabei z.B. Bestandteil eines KFZ sein. Bei der in den Figuren 15a und 15b gezeigten Darstellungen ist auch die Erfassungseinrichtung 1 dargestellt. Diese ist hier oberhalb der Primärspule 52 angeordnet und damit bevorzugt zwischen der Primärspule 52 und der weiteren Spule 64 bzw. dem Sekundärmodul 10 das zur Ladung der aufzuladenden Einrichtung (etwa eines Fahrzeugs) dient. Wie oben erwähnt, wäre es auch denkbar, dass die Erfassungseinrichtung 1 ein Bestandteil des Sekundärmoduls ist. Auch wäre es denkbar, dass zwei derartige Erfassungseinrichtungen (gleichartig oder unterschiedlich) vorgesehen sind, wobei bevorzugt eine dieser Erfassungseinrichtungen Bestandteil des Primärmoduls und eine andere Erfassungseinrichtung Bestandteil des Sekundärmoduls sein könnte. Weiterhin wäre es auch denkbar, dass die Ladeeinheit, beispielsweise das Primärmodul mehrere Erfassungseinrichtungen aufweist, welche beispielsweise auf unterschiedliche Objektgrößen oder allgemein Objektbeschaffenheiten konfiguriert sein könnten.

Figur 15b zeigt eine Seitenansicht der in Figur 15a gezeigten Darstellung. Das Bezugszeichen 56 kennzeichnet eine Steuerungseinrichtung, welche die Primärspule in Abhängigkeit von einem von der Erfassungseinrichtung 1 ausgegebenen Signal steuert. Falls beispielsweise die Sensoreinrichtung 1 ein Signal ausgibt, welche auf einen Fremdkörper zwischen der Primärspule 52 und dem Objekt 10 hinweist, kann die Steuerungseinrichtung eine Abschaltung der Primärspule bewirken.

Die Erfassungseinrichtung 1 bzw. der Sensorprint weist hier die zu vermessenden Netzwerke auf und ist eine flache Ausführung von mehreren nebeneinanderliegenden Spulen, wie in den oben genannten Figuren gezeigt. Dieser Sensor 1 befindet sich oberflächennah im Bodenmodul und bevorzugt direkt gegenüber der Primärspule. Die zugehörige Messelektronik kann auch in diesem Print untergebracht werden oder aber eine separate Printeinheit darstellen, die bevorzugt mittels eines Kabels auch den Sensorprint kontaktiert. So ist die Sensoreinrichtung in der Lage, die Oberfläche des Bodenmoduls (oder auch den Zwischenraum zwischen Primärmodul und Sekundärmodul) nach Objekten zu überwachen.

Wie oben dargestellt, ist es möglich, einzelne Elemente der Schaltkreise veränderbar zu wählen (z.B. mittels Trimmkondensatoren oder Kapazitätsdioden oder auch Potentiometern). Auf diese Weise eröffnen sich für weitere Anwendungen Möglichkeiten. So könnte beispielsweise eine Justierung unter verschiedenen Umweltbedingungen, beispielsweise eine Temperaturkompensation, erfolgen. Daneben könnte auch die Empfindlichkeit aufrechterhalten werden und es könnten Störobjekte diskriminiert werden.

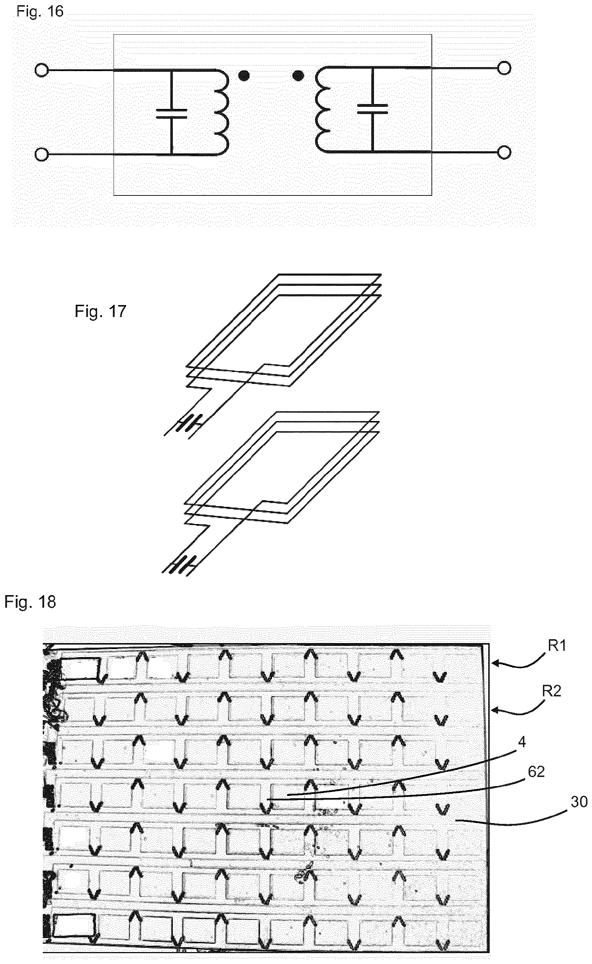

Daneben könnte - wie in Figur 16 gezeigt - das Netzwerk bzw. die Schaltung auch aus zu einander galvanisch getrennten Objekten aufgebaut sein, beispielsweise nach dem Transformatorprinzip. Dies könnte beispielsweise für die S21- Messung sinnvoll sein. Ein eingebrachtes Fremdobjekt zwischen den beiden Koppelspulen würde die Energietransmission beeinflussen und eine messbare S21- Messung hervorrufen. Figur 17 zeigt eine mögliche Ausgestaltung eines derartigen Systems aus zwei galvanisch gekoppelten Spulen. Eine derartige Anordnung könnte dann die komplette Zwischenraumüberwachung zwischen Boden- und Automodul übernehmen, wenn eine Sensorspule im Bodenmodul und die andere im Automodul befindlich ist).

Bei einer bevorzugten Ausführungsform weisen die einzelnen Spulen, die beispielsweise in Figur 5b gezeigt sind, eine Länge auf, die zwischen 200mm und 500mm, bevorzugt zwischen 300mm und 450mm liegt. Die Breite dieser Spulen liegt bevorzugt zwischen 10mm und 50mm, bevorzugt zwischen 20mm und 40mm. Die Windungszahl liegt bevorzugt zwischen 2 und 10, bevorzugt zwischen 2 und 8 und besonders bevorzugt zwischen 3 und 5. Daneben sind - wie in Figur 5b gezeigt - mehrere Überschlagungen möglich. Der Abstand zwischen den einzelnen Spulen (insb. wenn mehrere solcher überschlagener Spulen parallel angeordnet sind) liegt bevorzugt zwischen 2mm und 30mm, bevorzugt zwischen 4mm und 20mm und besonders bevorzugt zwischen 6mm und 12mm. Auf diese Weise kann einerseits erreicht werden, dass die Spulen nicht so stark ineinander überkoppeln und andererseits können auch kleinere Objekte erfasst werden und somit die Sensitivität aufrechterhalten werden kann. Auf diese Weise kann eine Erkennungstiefe von ca. 2 cm erreicht werden. So kann beispielsweise flächendeckend eine 10 Cent- Münze mit einer Grundfläche von ungefähr 315mm$^2$ durch die Sensoreinrichtung erfasst werden.

Bevorzugt liegt eine Sensorfläche im Verhältnis zu der Fläche des zu bestimmenden Objekts zwischen 20:1 und 60:1, bevorzugt zwischen 25:1 und 50:1 und besonders bevorzugt zwischen 30:1 und 40:1 (generell je kleiner dieses Verhältnis, also je mehr es zugunsten des Objekts ausfällt, umso besser). Dies bedeutet, dass die effektive Spulenfläche bevorzugt nicht mehr als 20 mal, bevorzugt nicht mehr als 30 mal und besonders bevorzugt nicht mehr als 35 mal so groß wie die Fläche des zu erkennenden Objekts sein sollte. Dabei ist jedoch anzumerken, dass dieses Flächenverhältnis auch maßgeblich von der materiellen Beschaffenheit der zu erwartenden Fremdobjekte bzw. Fremdkörper abhängt. Wie erwähnt, ist dieses Sensorbeispiel speziell für eine großflächige Anwendung mit geringer Erkennungstiefe entworfen, beispielsweise für Ladegeräte. Mit anderen Spulen und Kondensatoren kann eine größere Erkennungstiefe und/oder Sensitivität erzielt werden. Auf diese Weise eröffnen sich unterschiedliche Anwendungen.

Fig. 18 zeigt eine Darstellung eines Trägers 30 mit daran angeordneten Spulen 4. Man erkennt, dass diese Spulen 4 in mehreren Reihen R1, R2 angeordnet sind oder eine langgestreckte Spule sich in der besagten Reihe erstreckt. Das Bezugszeichen 62 kennzeichnet Leiterbahnen, welche diese Spulen 4 ausbilden. Hier ist es möglich, dass die Spulen (4) auf den Träger, beispielsweise eine Platine aufgedruckt sind. Die einzelnen Reihen an Spulen erstrecken sich jeweils geradlinig und sind bevorzugt auch parallel zueinander. Auf diese Weise kann ein Array an Spulen ausgebildet werden, wobei sich die Gesamtzahl der Spulen aus der Anzahl der Spulen in einer Reihe multipliziert mit der Anzahl der Reihen ergibt. Die in Fig. 18 gezeigte Anordnung erlaubt die Erfassung der Anwesenheit eines Objekts und auch eine bestimmte Lokalisierung in einer zu der Erstreckungsrichtung der Reihen senkrecht stehenden Richtung.

### Bezugszeichenliste

| | |
|---|---|
| 1 | Erfassungseinrichtung |
| 2 | Signalgenerator |
| 4 | (Erfassung)Spule |
| 6 | (Erfassungs) Kondensator |
| 10 | zu ladende Einrichtung, bzw. "Automodul" oder "Sekundärmodul" |
| 12 | Sensoreinrichtung |
| 18 | Multiplexer |
| 22 | Emitterschaltung , Impedanzanpassung |
| 24 | (HF -) Verstärker |
| 26 | Bandpass - Filter |
| 30 | Träger |
| 32 | bidirektionaler Richtkoppler |
| 34 | unidirektionaler Richtkoppler |
| 36 | Messeinrichtung; 42 Bandpass - Filter |
| 44 | HF - Verstärker allgemeiner: "Verstärker" |
| 46 | mehrstufiger logarithmischer Verstärker |
| 48 | Mikrocontroller |
| 50 | Ladeanordnung, Primärmodul |
| 52 | Primärspule |
| 54 | Gehäuse |
| 56 | Steuerungseinrichtung |
| 62 | Leiterbahnen |
| 64 | Sekundärspule |
| R1, R2 | Reihen von Spulen, oder langgestreckte Spule |

### Patentansprüche

1. Erfassungseinrichtung (1) zum Erfassen von Objekten während eines Ladebetriebs von elektrisch betriebenen Einrichtungen (10), wobei die Erfassungseinrichtung (1) wenigstens einen Signalgenerator (2) aufweist, welcher einen elektrischen Schaltkreis (4, 6), der wenigstens eine Erfassungsspule (4) und/oder wenigstens einen Kondensator (6) aufweist, mit einer Wechselspannung versorgt und mit einer Sensoreinrichtung (12), die wenigstens eine für diesen elektrischen Schaltkreis charakteristische elektrische Größe erfasst, wobei die für den elektrischen Schaltkreis (4, 6) charakteristische Größe aus einer Gruppe von Größen ausgewählt ist, welche eine Dämpfung des Schwingkreises, eine Verlustleistung, einen Retum-loss, eine Resonanz frequenz oder eine Änderung der Resonanzfrequenz sind, und **dadurch gekennzeichnet, dass**
diese charakteristischen Größen auf Basis von Streuparametermessungen des elektrischen Schaltkreises (4, 6) durch die Sensoreinrichtung (12) gewonnen sind, und weiter wobei es sich bei der charakteristischen Größe um eine solche handelt, die sich bei Anwesenheit eines weiteren und insbesondere bei Anwesenheit eines zu erfassenden Objekts ändert, sodass durch die Erfassungseinrichtung (1) die Anwesenheit der Objekte erfasst wird, wobei die Sensoreinrichtung wenigstens einen Richtkoppler aufweist, und weiter wobei die Sensoreinrichtung (12) so auch die Erkennung von Lebendobjekten erlaubt, und weiter wobei in einem Ladebetrieb Entkoppelkondensatoren induzierte Spannungen abblocken, so dass an den Richtkoppler keine Störspannungen gelangen, und sodass auf diese Weise auch ein Sensorbetrieb während des Ladezustands ermöglicht ist.

2.  Erfassungseinrichtung (1) nach Anspruch 1,
    **dadurch gekennzeichnet, dass**
    der Signalgenerator (2) eine hinsichtlich der Frequenz veränderbare Ausgangsspannung erzeugt.

3.  Erfassungseinrichtung (1) nach wenigstens einem der vorangegangenen Ansprüche,
    **dadurch gekennzeichnet dass**
    die Erfassungseinrichtung (1) eine Steuerungseinrichtung aufweist, welche die Frequenz der Ausgangsspannung des Signalgenerators in einem vorgegebenen Frequenzbereich steuert.

4.  Erfassungseinrichtung (1) nach wenigstens einem der vorangegangenen Ansprüche,
    **dadurch gekennzeichnet dass**
    die wenigstens eine Erfassungsspulen und/oder wenigstens ein Kondensator (4) auf einer Platine (30) angeordnet und bevorzugt auf diese Platine (30) aufgedruckt sind.

5.  Erfassungseinrichtung (1) nach wenigstens einem der vorangegangenen Ansprüche **dadurch gekennzeichnet dass**
    die Vorrichtung mehrere elektrische Schaltkreise (4, 6) aufweist so wie eine Schalteinrichtung (18) die bewirkt, dass diese Schwingkreise sequentiell mit der Wechselspannung beaufschlagt werden.

6.  Ladeanordnung (50) zum Laden von elektrisch betriebenen Einrichtungen (10) mit einer Primärspule (52), welche dazu geeignet und bestimmt ist, ein magnetisches Feld zu erzeugen, um elektrische Energie induktiv auf eine Sekundärspule, welche Bestandteil der elektrisch betriebenen Einrichtung (10) ist, zu übertragen, wobei die Ladeanordnung (50) eine Erfassungseinrichtung (1) nach Anspruch 1 zum Erfassen von Objekten während eines Ladebetriebs der elektrisch betriebenen Einrichtungen (10) aufweist,

7.  Ladeanordnung nach Anspruch 6,

**dadurch gekennzeichnet, dass**
die Primärspule (52) mit einer Primärspannung der Frequenz (f1) betrieben wird und der Signalgenerator (2) eine Wechselspannung der Frequenz (f2) abgibt und eine dieser beiden Frequenzen wenigstens doppelt so groß ist wie die andere der beiden Frequenzen (f1, f2).

8.  Ladeanordnung nach Anspruch 6 oder 7,
    **dadurch gekennzeichnet, dass**
    die Ladeanordnung eine Steuerungseinrichtung aufweist, welche eine Bestromung der Primärspule (52) in Abhängigkeit von einem Ausgangssignal der Erfassungseinrichtung (1) steuert.

9.  Verfahren zum Erfassen von Objekten (10) mittels einer Erfassungseinrichtung (11) gemäß zumindest einem der vorhergehenden Ansprüche 1 bis 5, wobei der wenigstens eine Schaltkreis mit wenigstens einer Spule (4) und/oder wenigstens einem Kondensator (6) von dem Signalgenerator (2) mit einer Wechselspannung beaufschlagt wird und die für diesen Schaltkreis (4, 6) charakteristische Größe gemessen wird, wobei in Abhängigkeit von dieser für diesen Schaltkreis (4, 6) charakteristischen Größe festgestellt wird, ob in der Umgebung des elektrischen Schaltkreises (4, 6) ein gegenüber diesem Schaltkreis (4, 6) Objekt (10) befindlich ist.

**Claims**

1.  Detection device (1) for detecting objects during a charging operation of electrically operated devices (10), wherein the detection device (1) comprises at least one signal generator (2) which supplies an alternating current voltage to an electrical circuit (4, 6) having at least one detection coil (4) and/or at least one capacitor (6), and with a sensor device (12) which detects at least one electrical variable which is characteristic for this electrical circuit, wherein the characteristic variable for the electrical circuit (4, 6) is selected from a group of variables, which are a damping of the resonant circuit, a power loss, a return loss, a resonant frequency or a change in the resonant frequency,
    **characterised in that**
    these characteristic variables are obtained on the basis of scattering parameter measurements of the electrical circuit (4, 6) by the sensor device (12), and further wherein the characteristic variable is one which changes in the presence of a further object and in particular in the presence of an object to be detected, so that the presence of the objects is detected by the detection device (1), wherein the sensor device (12) thus allows the recognition of living objects, and further wherein in a charging operation decoupling capacitors block induced voltages, so that no interfering voltages reach the directional coupler, and so that in this way a sensor operation is also enabled during the charging state.

2. Detection device (1) according to claim 1,
**characterised in that**
the signal generator (2) generates an output voltage which is variable with regard to the frequency.

3. Detection device (1) according to at least one of the preceding claims,
**characterised in that**
the detection device (1) has a control device which controls the frequency of the output voltage of the signal generator in a predetermined frequency range.

4. Detection device (1) according to at least one of the preceding claims,
**characterised in that**
the at least one detection coil and/or at least one detection capacitor (6) are arranged on a circuit board (30) and are preferably printed onto this circuit board (30).

5. Detection device (1) according to at least one of the preceding claims,
**characterised in that**
the device comprises a plurality of electrical circuits (4, 6) as well as a switching device (18) which causes these resonant circuits to be supplied sequentially with the alternating current voltage.

6. Charging arrangement (50) for charging electrically operated devices (10) with a primary coil (52) which is suitable and intended to generate a magnetic field, in order to transmit electrical power inductively to a secondary coil which is a component of the electrically operated device (10), wherein the charging arrangement (50) has a detection device (1) according to claim 1 for detecting objects during a charging operation the electrically operated devices (10).

7. Charging arrangement according to claim 6,
**characterised in that**
the primary coil (52) is operated with a primary voltage of the frequency (f1) and the signal generator (2) emits an alternating current voltage of the frequency (f2) and one of these two frequencies is at least twice as great as the other one of the two frequencies (f1, f2).

8. Charging arrangement according to claim 6 or 7,
**characterised in that**
the charging arrangement has a control device which controls the supply of power to the primary coil (52) as a function of an output signal of the detection device (1).

9. Method for detecting objects (10) by means of a detection device (11) according to at least one of the preceding claims 1 to 5, wherein the at least one circuit with at least one coil (4) and/or at least one capacitor (6) is supplied with an alternating current voltage by the signal generator (2) and the characteristic variable for this circuit (4, 6) is measured, wherein as a function of this characteristic variable for this circuit (4, 6) it is ascertained whether an object (10) which is movable relative to this circuit (4, 6) is located in the surroundings of the electrical circuit (4, 6).

**Revendications**

1. Dispositif de détection (1) destiné à détecter des objets pendant un fonctionnement de chargement de dispositifs actionnés électriquement (10), dans lequel le dispositif de détection (1) présente au moins un générateur de signal (2), lequel approvisionne un circuit électrique (4, 6), qui présente au moins une bobine de détection (4) et/ou au moins un condensateur (6), avec une tension alternative et avec un dispositif capteur (12) qui détecte au moins une grandeur électrique caractéristique pour ce circuit électrique, dans lequel la grandeur électrique caractéristique pour le circuit électrique (4, 6) est sélectionnée dans un groupe de grandeurs qui sont une atténuation du circuit oscillant, une perte de puissance, un affaiblissement de réflexion, une fréquence de résonance ou une modification de la fréquence de résonance, et
**caractérisé en ce que**
ces grandeurs caractéristiques sont obtenues sur la base de mesures de paramètres de répartition du circuit électrique (4, 6) par le dispositif capteur (12), et en outre dans lequel la grandeur caractéristique est une grandeur qui se modifie en présence d'un autre objet et en particulier en présence d'un objet à détecter, de sorte que par le dispositif de détection (1) la présence des objets soit détectée, dans lequel le dispositif capteur présente au moins un coupleur directif, et en outre dans lequel le dispositif capteur (12) autorise ainsi également la reconnaissance d'objets animés, et en outre dans lequel dans un fonctionnement de chargement des condensateurs de découplage bloquent des tensions induites, de sorte qu'aucune tension parasite ne parvienne jusqu'au coupleur directif, et de sorte que même un fonctionnement de captage soit de cette manière autorisé pendant l'état de chargement.

2. Dispositif de détection (1) selon la revendication 1,
**caractérisé en ce que**
le générateur de signal (2) produit des tensions de sortie modifiables s'agissant de la fréquence.

**3.** Dispositif de détection (1) selon au moins l'une des revendications précédentes, **caractérisé en ce que** le dispositif de détection (1) présente un dispositif de commande, lequel commande la fréquence de la tension de sortie du générateur de signal dans une gamme de fréquences prédéfinie.

**4.** Dispositif de détection (1) selon au moins l'une des revendications précédentes, **caractérisé en ce que** les au moins une bobine de détection et/ou au moins un condensateur (6) sont agencés sur une platine (30) et de préférence imprimés sur cette platine (30).

**5.** Dispositif de détection (1) selon au moins l'une des revendications précédentes, **caractérisé en ce que** l'équipement présente plusieurs circuits électriques (4, 6) tel un dispositif de commutation (18) qui a pour effet que ces circuits oscillants sont alimentés de façon séquentielle avec la tension alternative.

**6.** Agencement de chargement (50) destiné à charger des dispositifs actionnés électriquement (10) avec une bobine primaire (52), laquelle est conçue et déterminée pour produire un champ magnétique afin de transmettre une énergie électrique de façon inductive sur une bobine secondaire, laquelle est une composante du dispositif actionné électriquement (10), dans lequel l'agencement de chargement (50) présente un dispositif de détection (1) selon la revendication 1 destiné à détecter des objets pendant un fonctionnement de chargement des dispositifs actionnés électriquement (10).

**7.** Agencement de chargement selon la revendication 6, **caractérisé en ce que** la bobine primaire (52) est actionnée avec une tension primaire de la fréquence (f1) et le générateur de signal (2) délivre une tension alternative de la fréquence (f2) et l'une de ces deux fréquences est au moins deux fois plus grande que l'autre des deux fréquences (f1, f2).

**8.** Agencement de chargement selon la revendication 6 ou 7, **caractérisé en ce que** l'agencement de chargement présente un dispositif de commande, lequel commande une alimentation en courant de la bobine primaire (52) en fonction d'un signal de sortie du dispositif de détection (1).

**9.** Procédé destiné à détecter des objets (10) au moyen d'un dispositif de détection (11) selon au moins l'une des revendications précédentes 1 à 5, dans lequel le au moins un circuit électrique avec au moins une bobine (4) et/ou au moins un condensateur (6) est alimenté avec une tension alternative par le générateur de signal (2) et la grandeur caractéristique pour ce circuit électrique (4, 6) est mesurée, dans lequel en fonction de cette grandeur caractéristique pour ce circuit électrique (4, 6) il est décelé si dans l'environnement du circuit électrique (4, 6) se trouve un objet (10) eu égard à ce circuit électrique (4, 6).

Fig. 1

| Sinusquelle | | elektrisches Netzwerk | | Detektor |
| --- | --- | --- | --- | --- |

$2$      $4,6$      $12$

$1$

$\underline{a}_1$

$\underline{a}_2$

Vierpol

$\underline{b}_1$

$\underline{b}_2$

Fig. 2

Fig. 3a

Fig. 3b

Fig. 3c

Fig. 3d

Fig. 3e

Fig. 3f

Fig. 3g

Fig. 3h

Fig. 3i

Fig. 3j

Fig. 4a

$\underline{Z}$

f

Fig. 4b

$\underline{Z}$

f

Fig. 4c

$\underline{Z}$

f

Fig. 4d

$\underline{Z}$

f

Fig. 4e

$\underline{Z}$

f

x cm

4

y cm

Fig. 5a

4

Fig. 5b

6

Fig. 6a

6

Fig. 6b

Fig. 7a

4    4    4    · · · ·    4

18    Multiplexer

6

Fig. 7b

4

18    Multiplexer

4    4    4    4

4

· · · ·

18    Multiplexer

6

6

Fig. 7c

18

4

Multiplexer

4    4    4    4

6

4

· · · ·

18    Multiplexer

6

Fig. 8

$Z_w = 50\Omega$

$\underline{a}_1$

Vierpol

$\underline{a}_2 = 0$

$\underline{b}_1$

$\underline{b}_2$

AC

$Z_w = 50\Omega$

$k_1 * \underline{a}_1$    $k_2 * \underline{b}_1$    $k_3 * \underline{b}_2$    12

32    34

$Z_w = 50\Omega$

Fig. 9a

$\underline{a}_1$

Vierpol

$\underline{a}_2 = 0$

$\underline{b}_1$

$\underline{b}_2$

AC

$Z_w = 50\Omega$

$k_2 * \underline{b}_1$    $k_3 * \underline{b}_2$    12

32    34

$Z_w = 50\Omega$

Fig. 9b

Vierpol

$\underline{b}_1$

$\underline{b}_2$

AC

$Z_w = 50\Omega$

$k_1 * \underline{a}_1$    $k_2 * \underline{b}_1$    12

32

$Z_w = 50\Omega$

36

Fig. 9c

$\underline{a}_1$

Vierpol

$\underline{b}_2$

$\underline{b}_2$

AC

V

$Z_w = 50\Omega$

34    $k_2 * \underline{b}_1$    12

36

$Z_w = 50\Omega$

Fig. 9d

Vierpol

$\underline{b}_1$

$\underline{b}_1$

AC

V

$Z_w = 50\Omega$

Fig. 10a

$32$    $k_1 * \underline{a}_1$    $k_2 * \underline{b}_1$    $12$

$Z_w = 50\Omega$

AC

$\underline{a}_1$

Vierpol

$\underline{b}_1$

$Z_w = 50\Omega$

Fig. 10b

$k_2 * \underline{b}_1$

$32$    $12$

$Z_w = 50\Omega$

AC

Vierpol

$\underline{b}_1$

$Z_w = 50\Omega$

Fig. 10c

Fig. 10d

Fig. 10e

Fig. 10f

Fig. 11

Fig. 12

Fig. 13

Fig. 14

```
                          ┌──────────────────┐
                          │      Start        │
                          └──────────────────┘
                                   │
                          ┌──────────────────┐
                          │ Auswahl des ersten│
                          │    Netzwerks      │
                          └──────────────────┘
                                   │
                          ┌──────────────────┐
                          │ Setze Startfrequenz│
                          └──────────────────┘
                                   │
                          ┌──────────────────┐
                          │     Messung       │
                          └──────────────────┘
                                   │
                          ◇ Stopp Frequenz ◇──nein──┐
                          ◇  erreicht?    ◇         │
                                │ja        ┌────────────────────┐
                                          │ Frequenz um 500 Hz  │
                                          │     erhöhen         │
                                          └────────────────────┘
                          ◇ Letztes  ◇──nein──┐
                          ◇ Netzwerk?◇        │
                                │ja    ┌────────────────────┐
                                       │  Umschalten auf     │
                                       │ nächstes Netzwerk   │
                                       └────────────────────┘
                          ┌──────────────────┐
                          │   Auswertung      │
                          └──────────────────┘
```

Fig. 15a

Fig. 15b

Fig. 16

Fig. 17

Fig. 18

R1

R2

4

62

30